# EUROPEAN PATENT APPLICATION

(11) **EP 4 753 302 A1**
(43) Date of publication of application: **03.06.2026**
(21) Application number: 24945416.6
(22) Date of filing: 27.12.2024
(51) Int. Cl.: H04W 8/00

(54) **DATA IMPORT METHOD, ELECTRONIC DEVICE, AND COMPUTER-READABLE STORAGE MEDIUM**

(30) Priority: 20.06.2024 CN 202410798033
(71) Applicant: HUAWEI TECHNOLOGIES CO., LTD., Shenzhen 518129 (CN)
(72) Inventor: ZHANG, Bangming, Shenzhen, Guangdong 518129 (CN); WANG, Quanquan, Shenzhen, Guangdong 518129 (CN); ZHOU, Rong, Shenzhen, Guangdong 518129 (CN)
(74) Representative: Grünecker Patent- und Rechtsanwälte PartG mbB
(86) International application number: PCT/CN2024/143063
(87) International publication number: WO 2025/260692

(57) **Abstract**

Embodiments of this application provide a data import method, an electronic device, and a computer-readable storage medium. In the data import method, a first electronic device sends a Bluetooth advertising packet, then receives a request that is for displaying a visible light screen and that is sent by a second electronic device via a Bluetooth connection, and displays a visible light screen. Next, the first electronic device receives an authorization request sent by the second electronic device via the Bluetooth connection, performs authorization authentication with the second electronic device based on a connection code carried in the authorization request, after the authorization authentication succeeds, establishes a data transmission channel between the first electronic device and the second electronic device, and imports data of the second electronic device into the first electronic device, so that when a user has an old device, a configuration procedure of a new device is streamlined, and a configuration process of the new device is integrated with a cloning process, thereby creating a seamless configuration experience of the new device for the user. In addition, a visible light manner is used for authorization authentication, so that an interaction experience of identifying a connection code for the user can be improved.

## Description

This application claims priority to Chinese Patent Application No. 202410798033.9, filed with the China National Intellectual Property Administration on June 20, 2024 and entitled "DATA IMPORT METHOD, ELECTRONIC DEVICE, AND COMPUTER-READABLE STORAGE MEDIUM", which is incorporated herein by reference in its entirety.

### TECHNICAL FIELD

Embodiments of this application relate to the field of intelligent terminal technologies, and in particular, to a data import method, an electronic device, and a computer-readable storage medium.

### BACKGROUND

With the proliferation of electronic devices such as mobile phones, tablet computers, personal computers (personal computers, PCs), and/or smartwatches, a single user may own at least two electronic devices. Collaborative interaction between at least two electronic devices of the same user can bring significant convenience to personal entertainment and work. However, how to quickly migrate data and complete configuration of a new device has become a considerable concern for users.

In existing related technologies, when a new device is powered on for the first time, a new-device configuration wizard guides a user to complete configuration of the new device. After the configuration of the new device is complete, a cloning application is used to copy configurations, installed applications, and data of the applications from an "in-use device" to the new device. However, in the foregoing solution provided by the existing related technologies, a configuration process of the new device and a cloning process require cumbersome operations, and the configuration process of the new device and the cloning process are not correlated, resulting in a lack of a seamless configuration experience of the new device.

### SUMMARY

Embodiments of this application provide a data import method, an electronic device, and a computer-readable storage medium, so that when a user has an "in-use device", a configuration process of a new device is streamlined, and the configuration process of the new device is integrated with a cloning process, thereby creating a seamless configuration experience of the new device for the user.

According to a first aspect, this application provides a data import method, including: A first electronic device sends a Bluetooth advertising packet, where the Bluetooth advertising packet carries an identifier of the first electronic device and a first service requested by the first electronic device; receives a request that is for displaying a visible light screen and that is sent by a second electronic device via a Bluetooth connection, where the Bluetooth connection is established after the second electronic device, upon receiving the Bluetooth advertising packet, determines that the second electronic device has a capability of providing the first service and determines to establish a Bluetooth connection with the first electronic device; displays a visible light screen, where the visible light screen includes a visible light image, and the visible light image is generated based on a connection code; receives an authorization request sent by the second electronic device via the Bluetooth connection, where the authorization request is initiated after the second electronic device scans the visible light image on the visible light screen, decodes the visible light image, and obtains a connection code, and the authorization request carries the connection code obtained by the second electronic device; performs authorization authentication with the second electronic device based on the connection code carried in the authorization request; and after the authorization authentication succeeds, establishes a data transmission channel between the first electronic device and the second electronic device, and imports data of the second electronic device into the first electronic device through the data transmission channel.

In the foregoing data import method, the first electronic device sends the Bluetooth advertising packet, where the Bluetooth advertising packet carries the identifier of the first electronic device and the first service requested by the first electronic device. The first electronic device then receives the request that is for displaying a visible light screen and that is sent by the second electronic device via the Bluetooth connection, and displays the visible light screen. The visible light screen includes the visible light image. Next, the first electronic device receives the authorization request sent by the second electronic device via the Bluetooth connection, and performs the authorization authentication with the second electronic device based on the connection code carried in the authorization request. After the authorization authentication succeeds, the first electronic device establishes the data transmission channel between the first electronic device and the second electronic device, and imports the data of the second electronic device into the first electronic device through the data transmission channel, so that when a user has an old device, a configuration procedure of a new device is streamlined, a configuration process of the new device is integrated with a cloning process, and the user does not need to find and open cloning applications on the new device and the old device, thereby creating a seamless configuration experience of the new device for the user. In addition, a visible light manner providing a better experience is used in this embodiment for authorization authentication, so that an interaction experience of identifying a connection code for the user can be improved.

In a possible implementation, the data of the second electronic device includes one or a combination of the following: user account data for logging in to the second electronic device, configuration data of the second electronic device, an application installed on the second electronic device, and data of the application.

In a possible implementation, before the displaying the visible light screen, the first electronic device may further generate the connection code, and generate the visible light image based on the connection code.

In a possible implementation, the generating the visible light image based on the connection code includes: generating an initial image based on the connection code; dividing the initial image into at least two regions, and generating k information points in each region, where k is a positive integer, and k ≥ 1; performing frequency error information encoding on the k information points; and performing differential encoding on the encoded k information points to generate the visible light image.

In a possible implementation, the performing the authorization authentication with the second electronic device based on the connection code carried in the authorization request may be: The first electronic device matches the connection code carried in the authorization request against the connection code generated by the first electronic device. That the authorization authentication succeeds includes: the connection code carried in the authorization request successfully matches the connection code generated by the first electronic device.

In a possible implementation, after the authorization authentication succeeds, the first electronic device may further receive a notification that is for closing the visible light screen and that is sent by the second electronic device via the Bluetooth connection. The first electronic device closes the visible light screen in response to receiving the notification.

In a possible implementation, before the establishing the data transmission channel between the first electronic device and the second electronic device, after the authorization authentication succeeds, the first electronic device may further display a lock screen password verification screen, where the lock screen password verification screen includes prompt information for entering a lock screen password of the second electronic device; obtain a lock screen password entered by a user using the first electronic device; send the lock screen password entered by the user to the second electronic device; and after the first electronic device receives a notification that indicates that the lock screen password entered by the user is correct and that is sent by the second electronic device, set the lock screen password entered by the user as a lock screen password of the first electronic device.

In a possible implementation, the Bluetooth advertising packet may be a generic advertising indication packet.

According to a second aspect, embodiments of this application provide a data import method, including: A second electronic device receives a Bluetooth advertising packet sent by a first electronic device, where the Bluetooth advertising packet carries an identifier of the first electronic device and a first service requested by the first electronic device; determines that the second electronic device has a capability of providing the first service, determines to establish a Bluetooth connection with the first electronic device, and then establishes a Bluetooth connection between the second electronic device and the first electronic device; sends, to the first electronic device via the Bluetooth connection, a request for displaying a visible light screen; after the first electronic device displays the visible light screen, scans a visible light image on the visible light screen; decodes the visible light image to obtain a connection code; sends an authorization request to the first electronic device via the Bluetooth connection, where the authorization request carries the connection code, so that the first electronic device performs authorization authentication on the second electronic device based on the connection code; and after the authorization authentication succeeds, establishes a data transmission channel between the second electronic device and the first electronic device, and imports data of the second electronic device into the first electronic device through the data transmission channel.

In the foregoing data import method, the second electronic device receives the Bluetooth advertising packet sent by the first electronic device, determines that the second electronic device has the capability of providing the first service, and determines to establish a Bluetooth connection with the first electronic device. Next, the second electronic device establishes the Bluetooth connection between the second electronic device and the first electronic device, and then sends, to the first electronic device via the Bluetooth connection, the request for displaying a visible light screen. After the first electronic device displays the visible light screen, the second electronic device scans the visible light image on the visible light screen, and decodes the visible light image to obtain the connection code. The second electronic device then sends the authorization request to the first electronic device via the Bluetooth connection. After the authorization authentication succeeds, the second electronic device establishes the data transmission channel between the second electronic device and the first electronic device, and imports the data of the second electronic device into the first electronic device through the data transmission channel, so that when a user has an old device, a configuration procedure of a new device is streamlined, a configuration process of the new device is integrated with a cloning process, and the user does not need to find and open cloning applications on the new device and the old device, thereby creating a seamless configuration experience of the new device for the user. In addition, a visible light manner providing a better experience is used in this embodiment for authorization authentication, so that an interaction experience of identifying a connection code for the user can be improved.

In a possible implementation, the decoding the visible light image to obtain the connection code may be: The second electronic device obtains at least two image frames that include the visible light image; performs an inter-frame difference operation on the at least two image frames, and performs local threshold binarization on a result obtained by the difference operation to obtain a binarized image; obtains positioning point information based on the binarized image; obtains, based on the positioning point information, indices of at least two regions included in the visible light image and an information point in each region; performs error checking and correction and decoding on the information point in each region to obtain at least two connection codes and an error correction bit corresponding to each connection code; and merges the at least two connection codes and the error correction bit corresponding to each connection code to obtain an error-corrected connection code.

In a possible implementation, the Bluetooth advertising packet further carries a ranging adaptation parameter; and before the determining that the second electronic device has the capability of providing the first service, the method further includes: determining, based on the ranging adaptation parameter in the Bluetooth advertising packet, that a distance between the first electronic device and the second electronic device is less than or equal to a predetermined distance threshold.

In a possible implementation, the determining to establish the Bluetooth connection with the first electronic device includes: obtaining a determination indication for establishing a Bluetooth connection with the first electronic device, where the determination indication is input by a user using the second electronic device on a setting screen displayed by the second electronic device.

In a possible implementation, before scanning the visible light image on the visible light screen, the second electronic device may further receive a notification that indicates that the visible light screen is successfully displayed and that is sent by the first electronic device via the Bluetooth connection; and display a code scanning screen, where the code scanning screen includes a code scanning frame.

In a possible implementation, the determining that the second electronic device has the capability of providing the first service may be: The second electronic device determines that the second electronic device has an application that provides the first service. In this way, after the authorization authentication succeeds, the second electronic device may start the application that provides the first service on the second electronic device.

According to a third aspect, embodiments of this application provide a first electronic device, including: one or more processors, a memory, a plurality of applications, and one or more computer programs. The one or more computer programs are stored in the memory. The one or more computer programs include instructions. When the instructions are executed by the first electronic device, the first electronic device is enabled to perform the method provided in the first aspect.

According to a fourth aspect, embodiments of this application provide a second electronic device, including: one or more processors, a memory, a plurality of applications, and one or more computer programs. The one or more computer programs are stored in the memory. The one or more computer programs include instructions. When the instructions are executed by the second electronic device, the second electronic device is enabled to perform the method provided in the second aspect.

It should be understood that the technical solution in the third aspect of the embodiments of this application is consistent with the technical solution in the first aspect of the embodiments of this application, and beneficial effects achieved by the aspects and corresponding feasible implementations are similar. Details are not described again.

It should be understood that the technical solution in the fourth aspect of the embodiments of this application is consistent with the technical solution in the second aspect of the embodiments of this application, and beneficial effects achieved by the aspects and corresponding feasible implementations are similar. Details are not described again.

According to a fifth aspect, embodiments of this application provide a computer-readable storage medium. The computer-readable storage medium stores a computer program. When the computer program is run on a computer, the computer is enabled to perform the method provided in the first aspect.

According to a sixth aspect, embodiments of this application provide a computer-readable storage medium. The computer-readable storage medium stores a computer program. When the computer program is run on a computer, the computer is enabled to perform the method provided in the second aspect.

According to a seventh aspect, embodiments of this application provide a computer program. When the computer program is executed by a computer, the computer program is used to perform the method provided in the first aspect.

According to an eighth aspect, embodiments of this application provide a computer program. When the computer program is executed by a computer, the computer program is used to perform the method provided in the second aspect.

In a possible design, all or some of the programs in the seventh aspect and the eighth aspect may be stored in a storage medium packaged with the processor, or some or all of the programs may be stored in a memory not packaged with the processor.

### BRIEF DESCRIPTION OF DRAWINGS

FIG. 1 is a diagram of a guided configuration process of a new device;
FIG. 2A to FIG. 2J are diagrams of a data cloning process;
FIG. 3 is a diagram of a structure of an electronic device according to an embodiment of this application;
FIG. 4 is a block diagram of a software architecture of an electronic device 100 according to an embodiment of this application;
FIG. 5(a)-1 to FIG. 5(a)-17 are diagrams of screens in a configuration process of a new device according to an embodiment of this application;

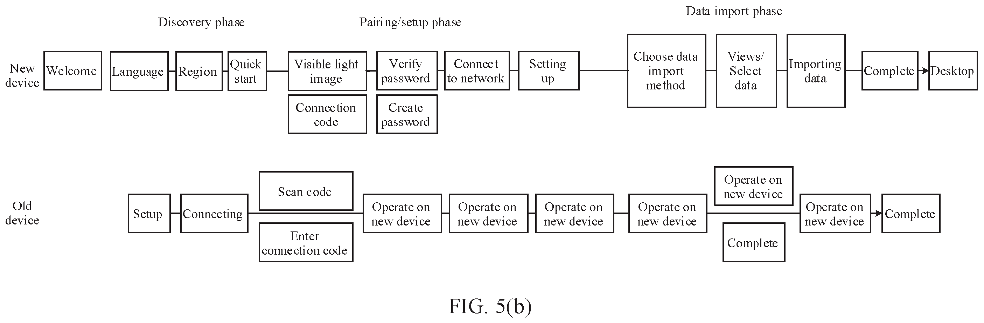

FIG. 5(b) is a diagram of an operation procedure of a user in a configuration process of a new device according to an embodiment of this application;

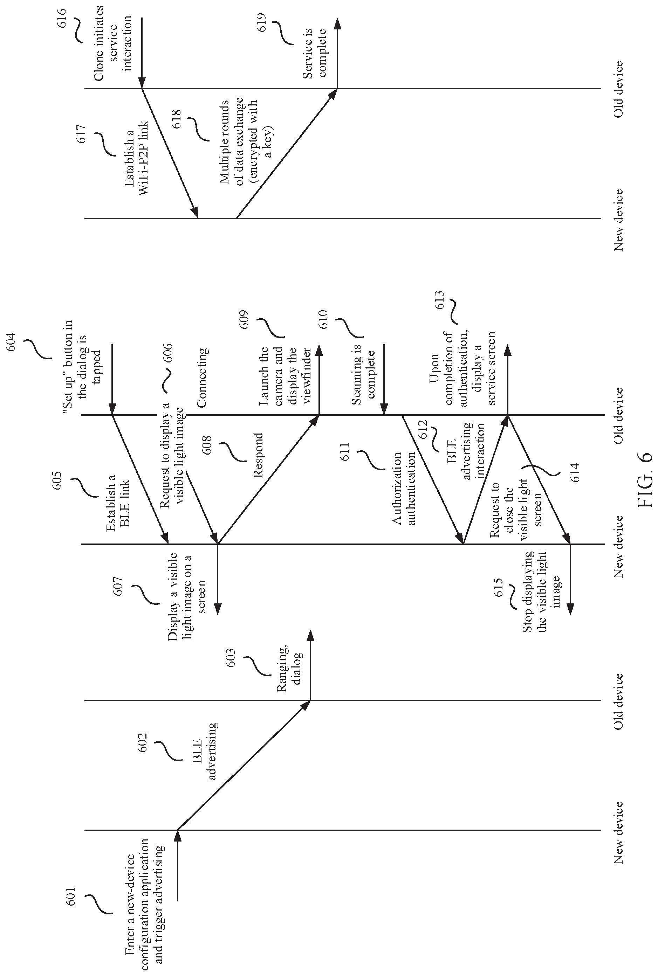

FIG. 6 is a diagram of interaction between a new device and an old device in a configuration process of the new device according to an embodiment of this application;

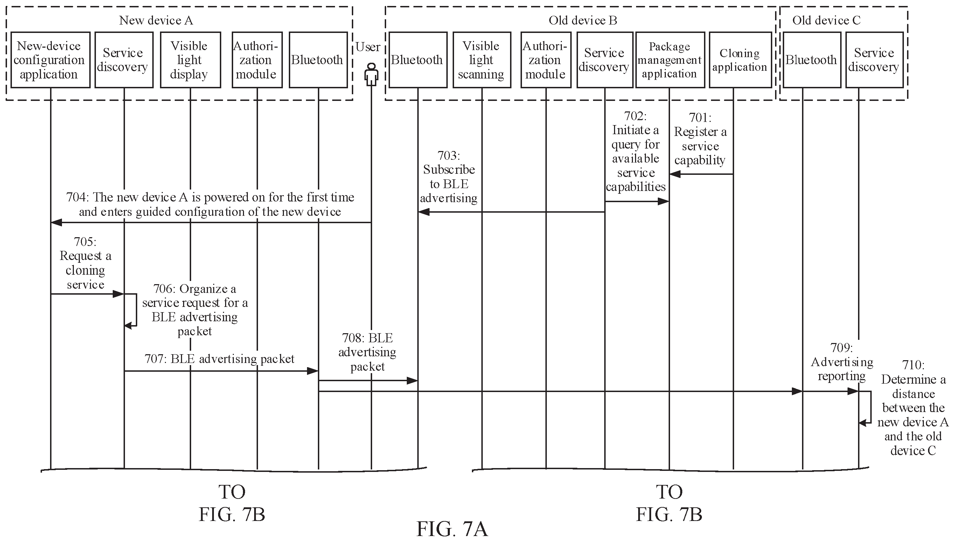

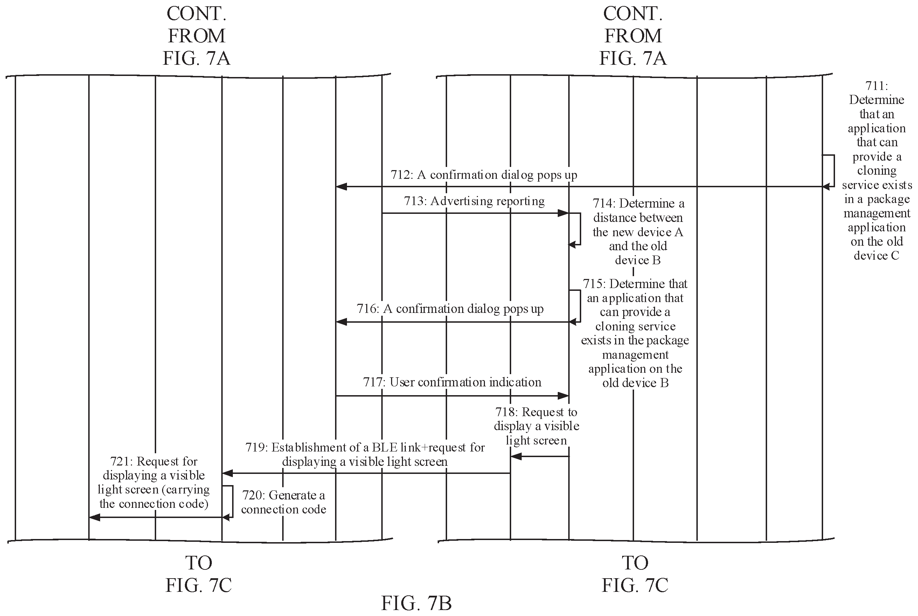

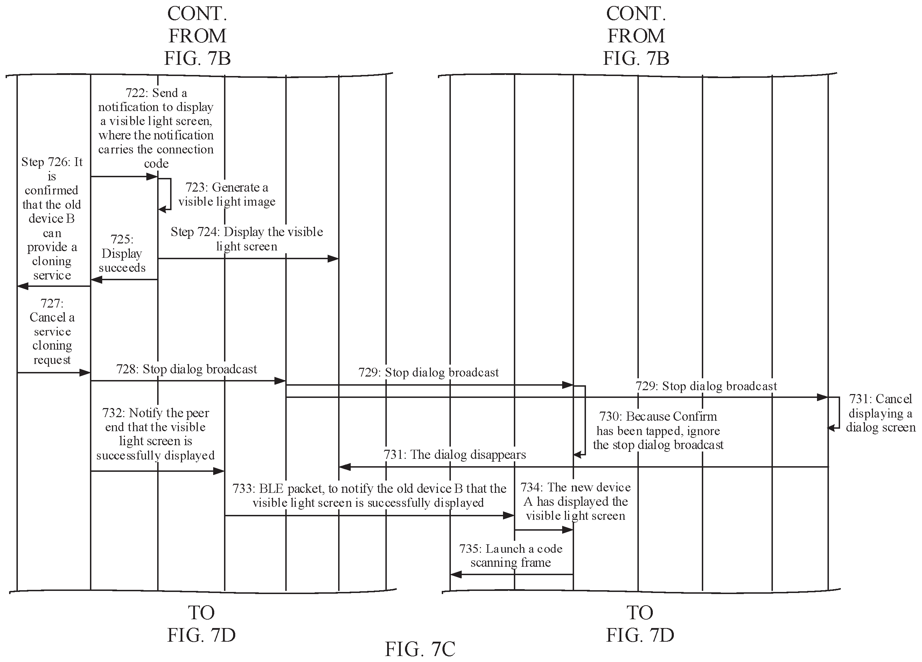

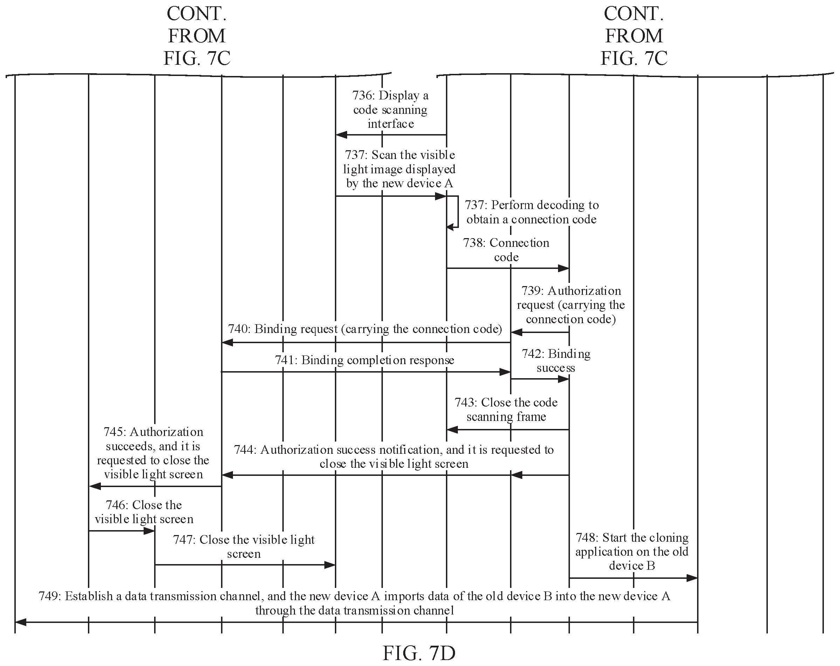

FIG. 7A to FIG. 7D are flowcharts of a data import method according to an embodiment of this application;

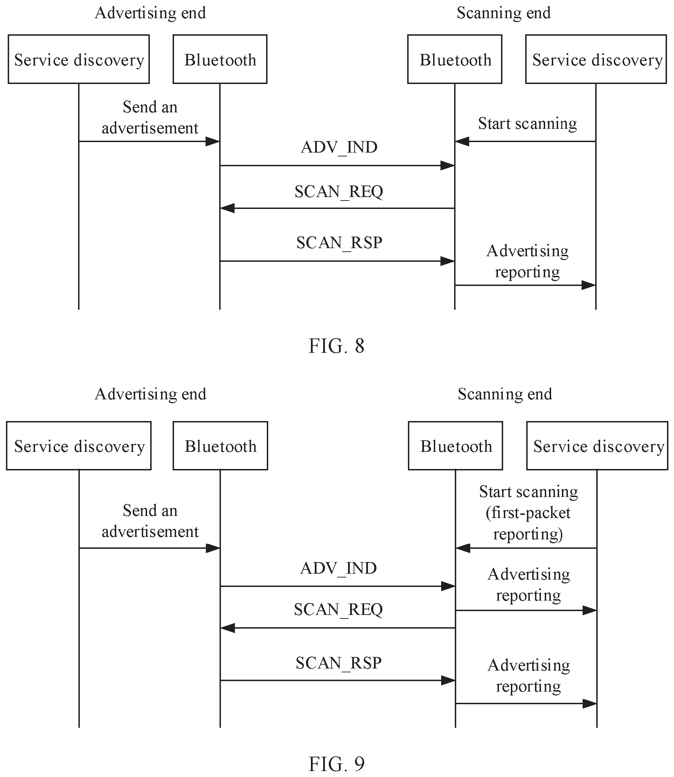

FIG. 8 is a diagram of advertising reporting in the BLE protocol specification;
FIG. 9 is a diagram of advertising reporting according to an embodiment of this application;

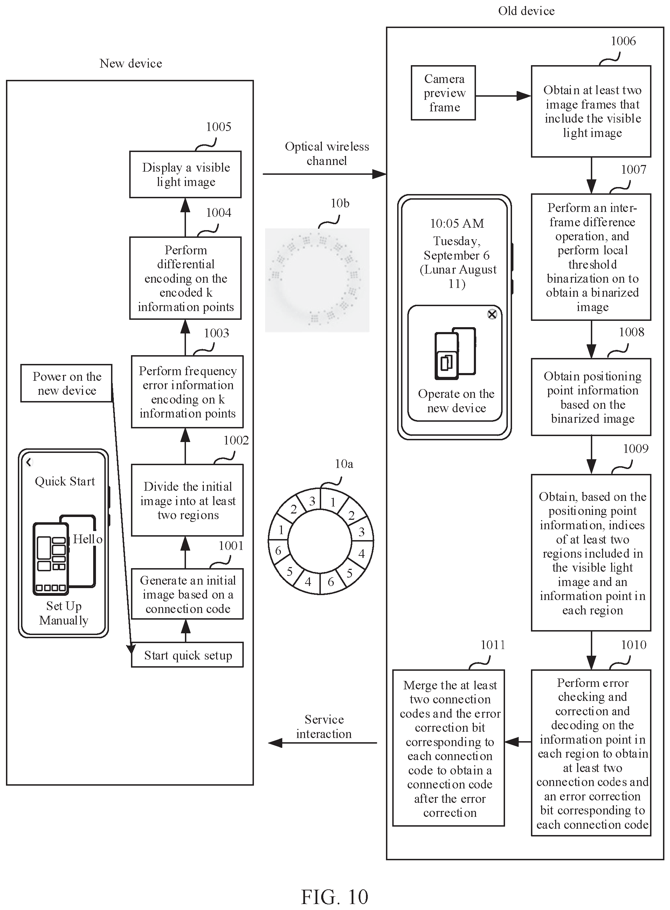

FIG. 10 is a flowchart of displaying and decoding a visible light image according to an embodiment of this application;

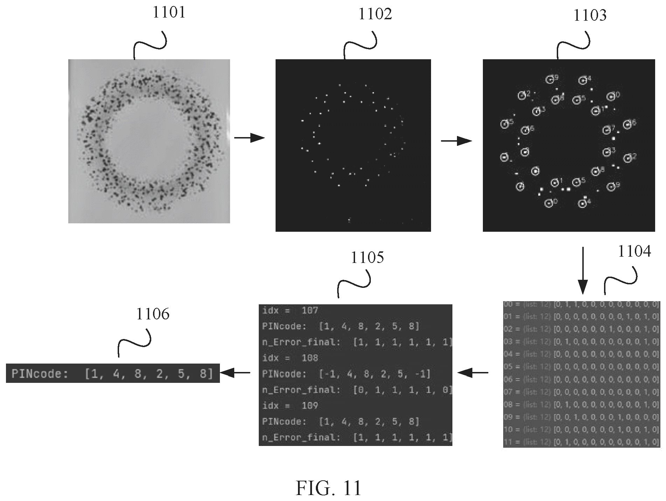

FIG. 11 is a diagram of a process of decoding a visible light image according to an embodiment of this application;

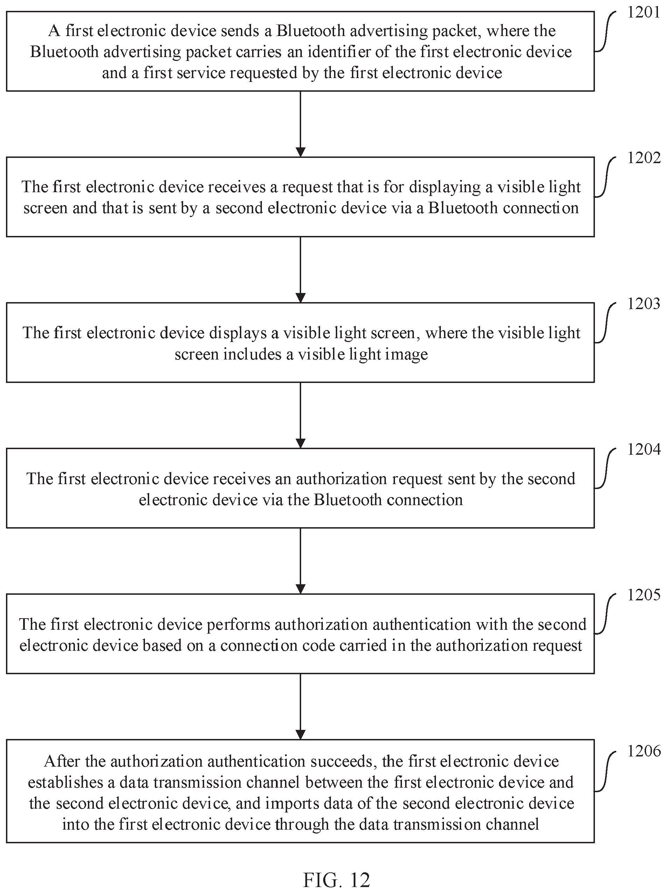

FIG. 12 is a flowchart of a data import method according to an embodiment of this application;

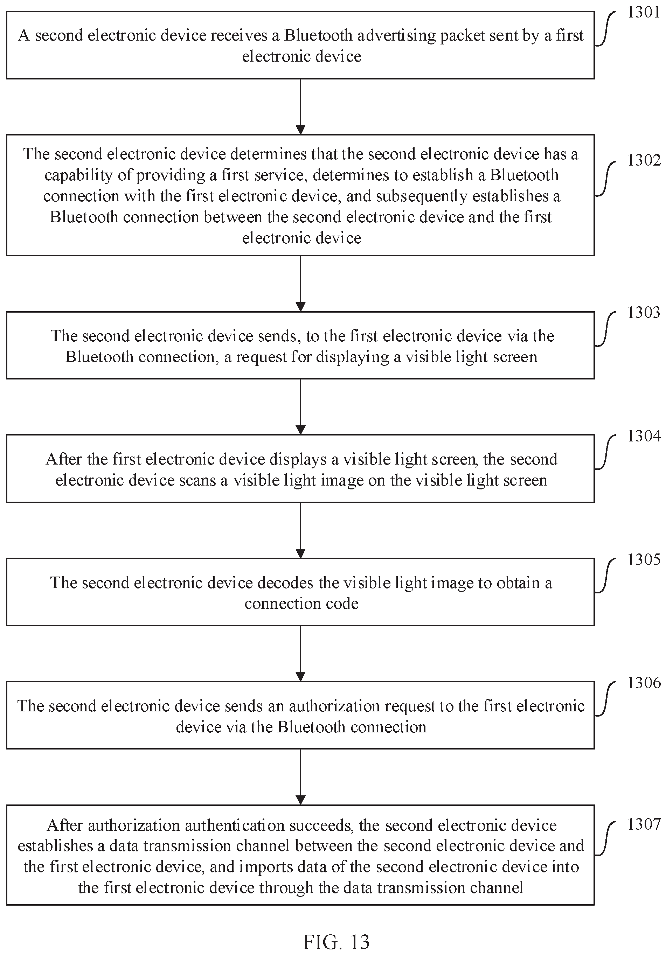

FIG. 13 is a flowchart of a data import method according to another embodiment of this application; and

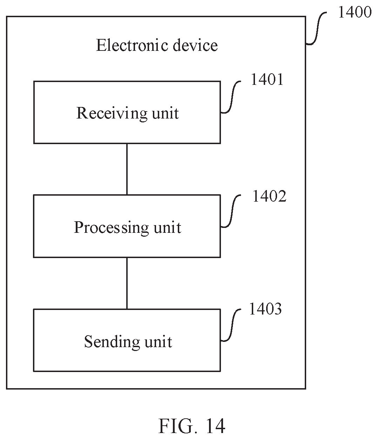

FIG. 14 is a diagram of a structure of an electronic device according to another embodiment of this application.

### DESCRIPTION OF EMBODIMENTS

Terms used in the implementations of this application are only used to explain specific embodiments of this application, but are not intended to limit this application.

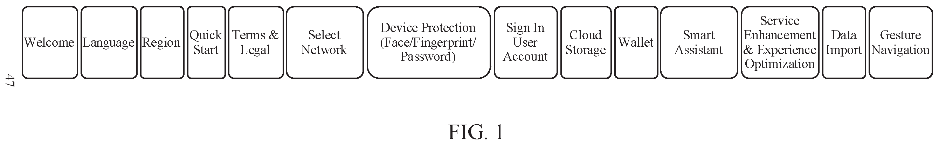

In existing related technologies, when a new electronic device (for example, a smartphone) is powered on for the first time, the new electronic device may run a new-device configuration wizard to guide a user to complete configuration of a new device. FIG. 1 is a diagram of a guided configuration process of a new device. As shown in FIG. 1, an existing guided configuration process of the new device includes configuration operations such as Welcome, Language, Region, Quick Start, ..., Data Import, and Gesture Navigation.

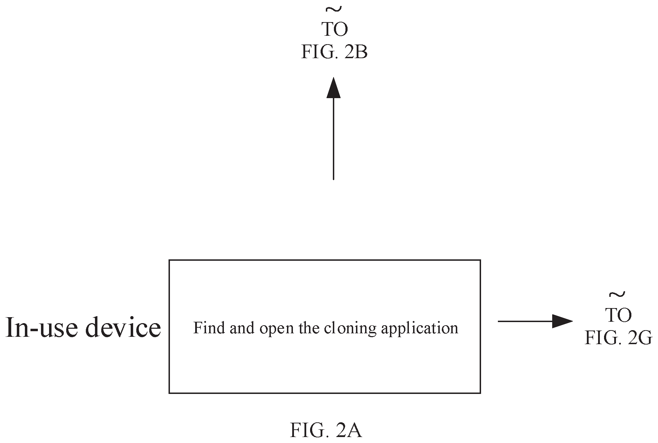

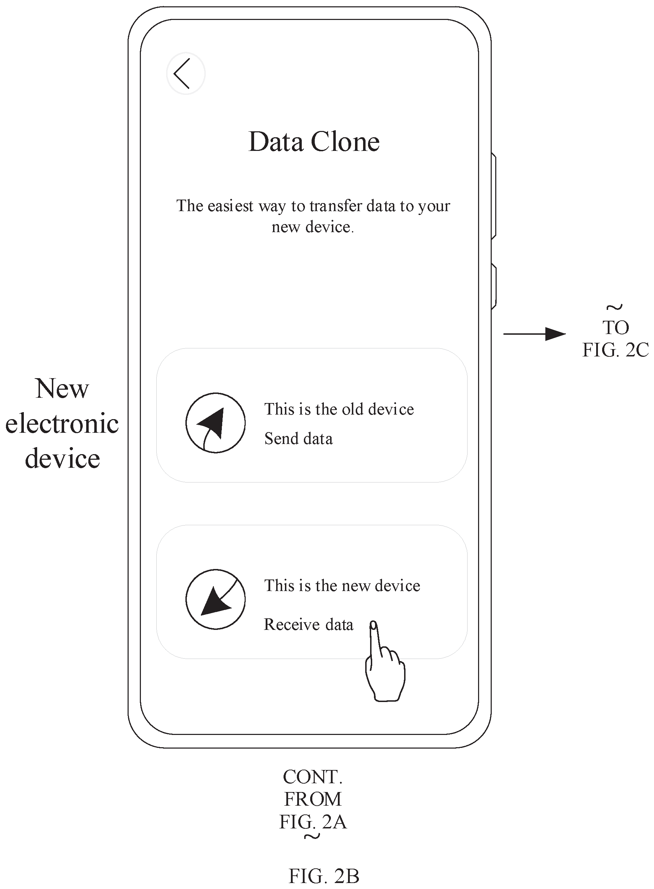

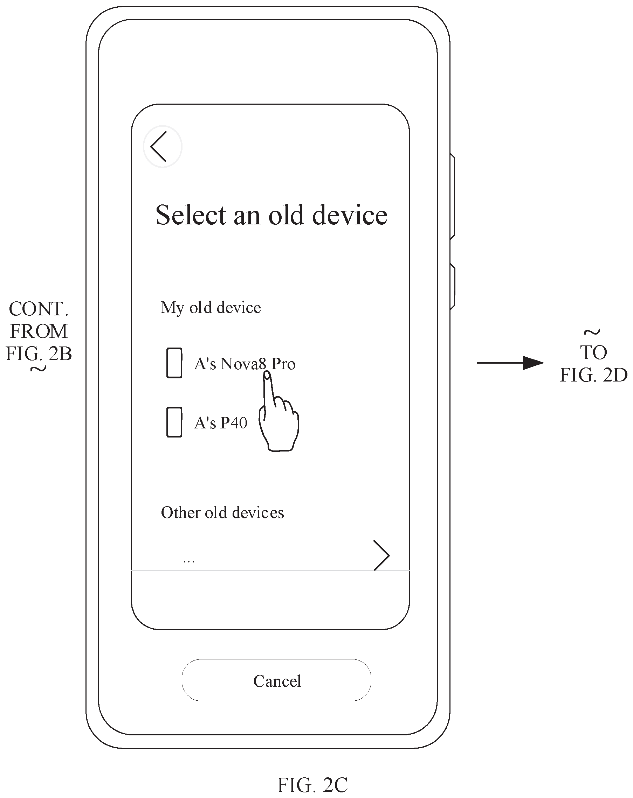

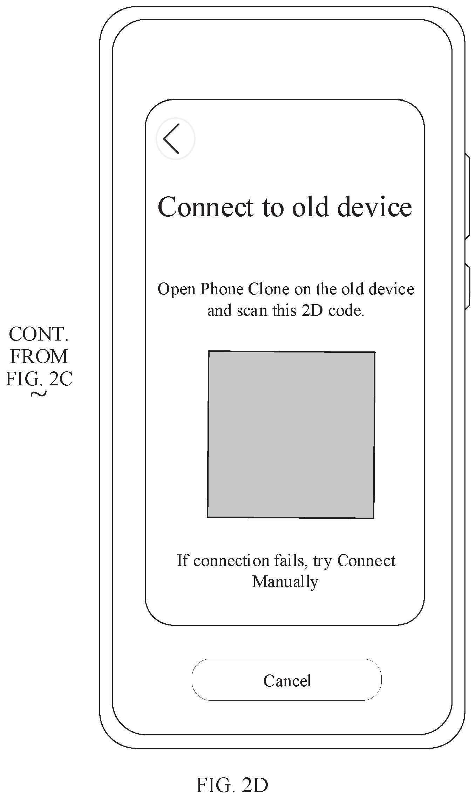

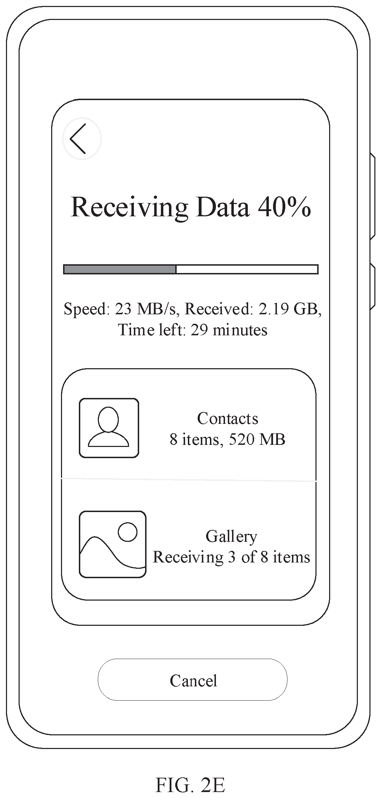

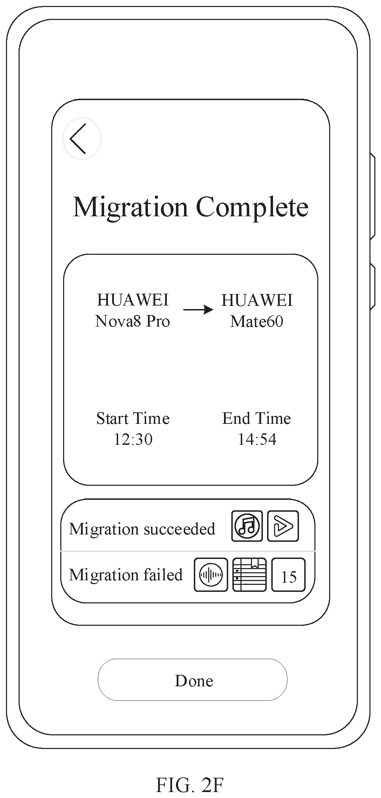

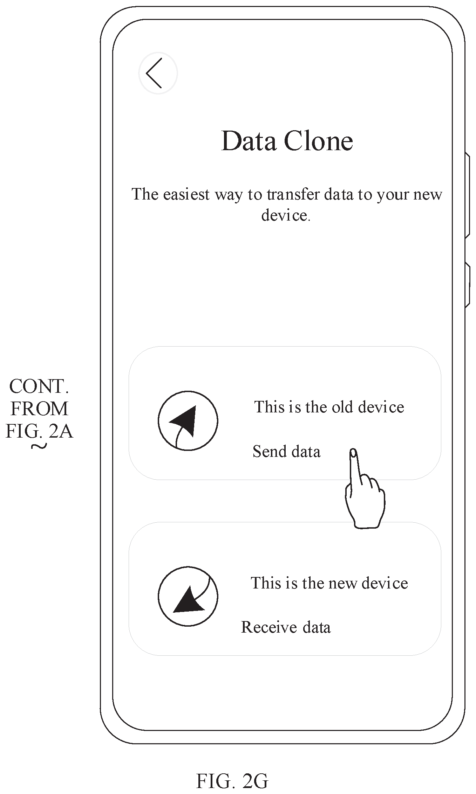

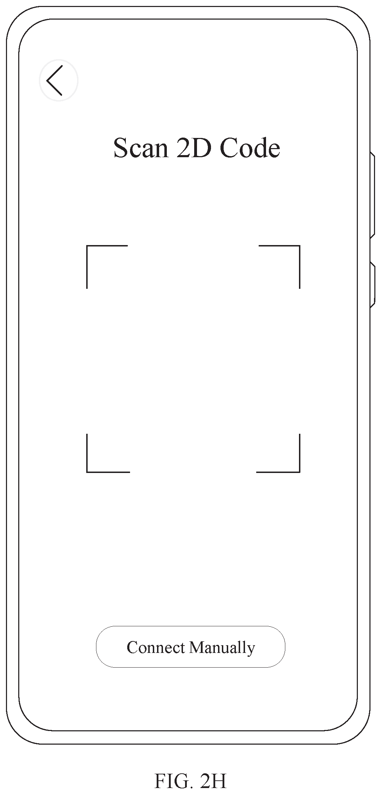

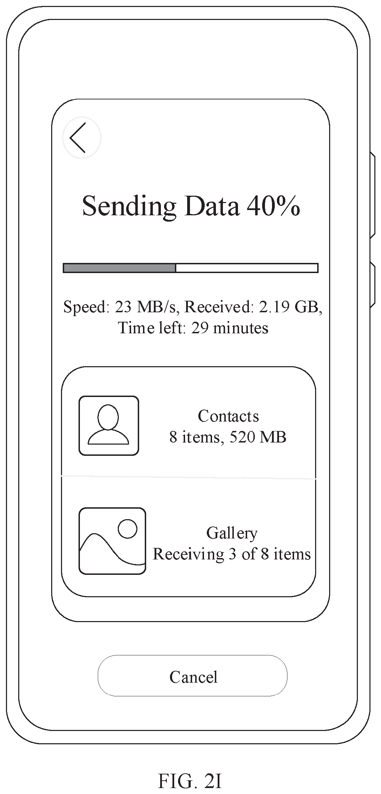

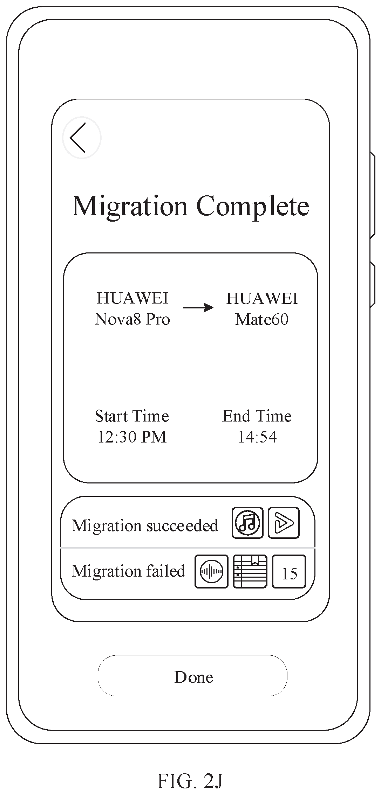

After the configuration of the new device is complete, the user may find and open a cloning application on the new electronic device. In response to the operation of opening the cloning application by the user, the new electronic device may run the cloning application. As shown in FIG. 2A to FIG. 2J, after running the cloning application, the new electronic device first displays a "Data Clone" screen. Next, the user may select "This is the new device" on the "Data Clone" screen. Next, the new electronic device displays a "Select an old device" screen, and the user may select, on the "Select an old device" screen, an old device, for example, "A's Nova8 Pro", from which data is to be migrated. Subsequently, the new electronic device displays a "Connect to old device" screen, and a two-dimensional code is displayed on the "Connect to old device" screen. In this case, the user may find and open a cloning application on the "in-use device". The "in-use device" displays a "Data Clone" screen, and then the user may select "This is the old device" on the "Data Clone" screen displayed by the "in-use device". Next, the "in-use device" displays a code scanning frame, and the user uses the "in-use device" to scan the two-dimensional code displayed by the new electronic device on the "Connect to old device" screen. The "in-use device" then starts to send data to the new electronic device, and the new electronic device receives the data, so that configuration data, installed applications, and data of the applications on the "in-use device" can be copied to the new electronic device. FIG. 2A to FIG. 2J are diagrams of a data cloning process.

However, the foregoing configuration process of the new device requires complex manual operations, including more than ten configuration operations such as Language, Region, Network, User Account, and Password. In the cloning process, the user needs to find and open the cloning applications on the new electronic device and the in-use device, and then performs more than five operations. In addition, the configuration process of the new device and the cloning process are not correlated, resulting in a lack of a seamless configuration experience of the new device. The experience of two-dimensional code scanning is rigid and fails to create a memorable impression for users.

Based on the foregoing problem, embodiments of this application provide a data import method, so that when a user has an "in-use device", a configuration process of a new device can be streamlined, and the configuration process of the new device can be integrated with a cloning process, thereby creating a seamless configuration experience of the new device for the user.

The data import method provided in the embodiments of this application may be applied to an electronic device. The electronic device may be a smartphone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or the like. A specific type of the electronic device is not limited in the embodiments of this application.

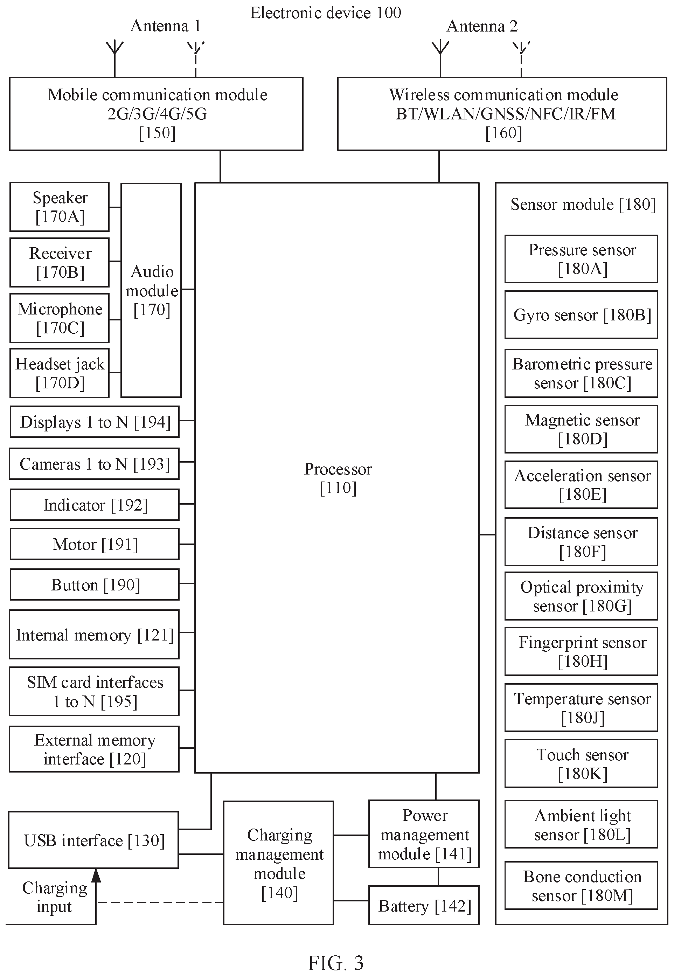

For example, FIG. 3 is a diagram of a structure of an electronic device according to an embodiment of this application. As shown in FIG. 3, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to the USB standard specification, and may be specifically a Mini USB interface, a Micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be configured to connect to another electronic device like an AR device.

It can be understood that an interface connection relationship between modules illustrated in the embodiments of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution to wireless communication applied to the electronic device 100 and including wireless local area networks (wireless local area networks, WLAN) (such as wireless fidelity (Wi-Fi)), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave through the antenna 2, performs frequency modulation and filtering on the electromagnetic wave signal, and transmits a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device through a wireless communications technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long-term evolution (long-term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite-based augmentation systems (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a still image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function, an image playing function, or the like), and the like. The data storage area may store data (for example, audio data, an address book, or the like) created during use of the electronic device 100, and the like. In addition, the internal memory 121 may include a high-speed random access memory, and may further include a nonvolatile memory, for example, at least one magnetic disk storage device, a flash storage device, and a universal flash storage (universal flash storage, UFS). The processor 110 runs instructions stored in the internal memory 121 and/or instructions stored in the memory disposed in the processor, to perform various functional applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to acquire sound signals and further implement a noise reduction function. In some other embodiments, three, four, or more microphones 170C may alternatively be disposed in the electronic device 100, to acquire a sound signal, implement noise reduction, and identify a sound source, to implement a directional recording function, and the like.

The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effect. The motor 191 may also correspond to different vibration feedback effects for touch operations performed on different areas of the display 194. Different application scenarios (for example, a time reminder, information receiving, an alarm clock, and a game) may also correspond to different vibration feedback effect. Touch vibration feedback effect may be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

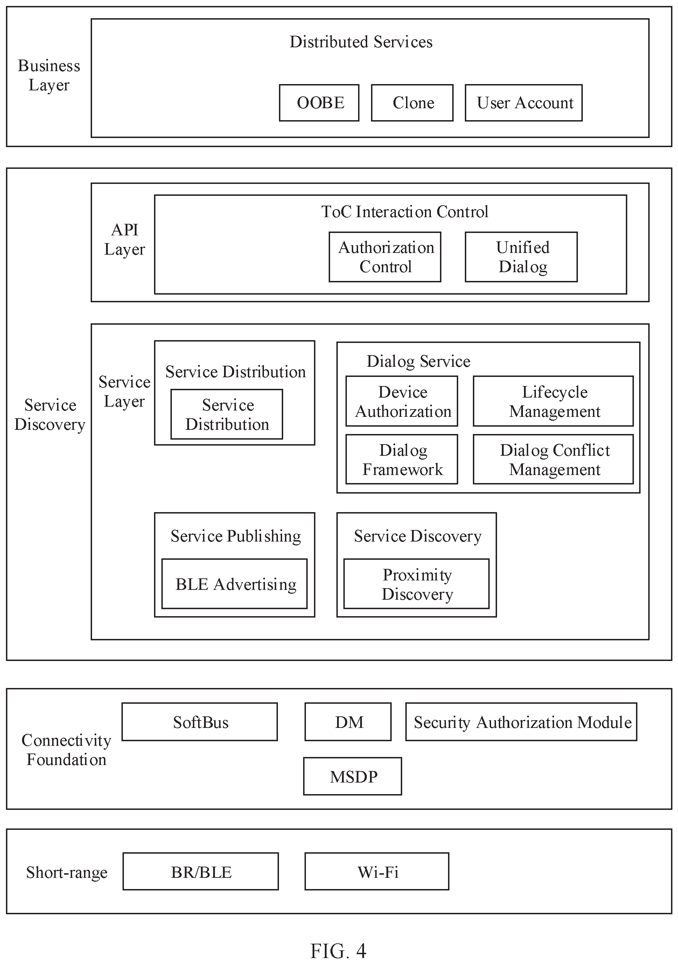

In the embodiments of this application, an architecture of a software system of the electronic device 100 may be shown in FIG. 4. FIG. 4 is a block diagram of a software architecture of an electronic device 100 according to an embodiment of this application.

As shown in FIG. 4, a software system of the electronic device 100 may include four layers, which are sequentially Business Layer, Service Discovery, Connectivity Foundation, and Short-range from top to bottom. The layers communicate with each other through a software interface.

Business Layer includes services such as Out-of-Box Experience (out of box experience, OOBE), Clone, and User Account. After a new electronic device is powered on for the first time, OOBE may guide a user to perform a configuration process of a new device. Clone may copy data of an "in-use device" of the user to the new electronic device. User Account may allow the user to log in to a user account of the user.

Service Discovery includes an application programming interface (application programming interface, API) layer and a service layer. The API layer includes touchscreen object controller (touchscreen object controller, ToC) interaction controls. The ToC interaction controls include an authorization control and a unified dialog control. The authorization control is configured to perform authorization authentication between the new electronic device and the in-use device. The unified dialog control may provide modal interaction, and is configured to confirm an operation, display an alarm, or provide more options.

The service layer includes Service Distribution, Dialog Service, Service Publishing, and Service Discovery. Dialog Service is configured to implement dialog-related services, including Device Authorization, Lifecycle Management, Dialog Framework, and Dialog Conflict Management. Service Publishing includes Bluetooth Low Energy (Bluetooth low energy, BLE) Advertising. BLE Advertising can send BLE advertising packets. Service Discovery includes Proximity Discovery. In Proximity Discovery, a BLE advertising packet can be received to determine whether a distance between an electronic device that sends the BLE advertising packet and the electronic device meets a proximity distance.

Connectivity Foundation includes SoftBus, Device Manager (device manager, DM), Security Authorization Module, and Multicast Source Discovery Protocol (multicast source discovery protocol, MSDP).

Short-range includes Basic Rate (basic rate, BR)/BLE and Wi-Fi. BR/BLE may support the electronic device 100 in performing Bluetooth communication, and Wi-Fi may support the electronic device 100 in performing wireless network communication.

For ease of understanding, in the following embodiments of this application, an electronic device having the structures shown in FIG. 3 and FIG. 4 is used as an example to specifically describe the data import method provided in embodiments of this application with reference to the accompanying drawings and application scenarios.

The data import method provided in the embodiments of this application may use BLE advertising and advertising-based ranging to complete proximity device notification; may complete authorization authentication of a new electronic device and an in-use device based on connection code identification through visible light and scanning identification; and may further integrate a configuration procedure of a new device and a cloning procedure to complete seamless configuration of the new device. In the descriptions of the following embodiments, for ease of description, the new electronic device is referred to as a "new device" or a "new phone", and the in-use device is referred to as an "old device" or an "old phone". It may be understood that both the new device and the old device may be implemented using the structures shown in FIG. 3 and FIG. 4.

FIG. 5(a)-1 to FIG. 5(a)-17 are diagrams of screens in a configuration process of a new device according to an embodiment of this application. As shown in FIG. 5(a)-1 to FIG. 5(a)-17, after the new device is powered on for the first time, a screen shown by 51 is displayed, and a user may select a language on the screen shown by 51. In this embodiment, the language selected by the user is "Simplified Chinese". After the new device is powered on, if Bluetooth on an old device currently used by the user is enabled and the old device receives a Bluetooth advertising packet from the new device, the old device displays a dialog screen on a currently displayed screen, as shown by 512. On the screen shown by 512, the screen currently displayed by the old device is a lock screen, and the dialog screen is displayed on the lock screen. Prompt information "Use your user account '123@huawei.com' to set up this device" and an "Unlock and Set up" button are displayed on the dialog screen. After the user taps the "Unlock and Set up" button, it indicates that the user confirms establishment of a Bluetooth connection with the new device.

After the user selects the language, the new device displays a screen shown by 52, and then the user may select a region on the screen shown by 52. In this embodiment, the region selected by the user is "China". After the user selects the region, the new device displays a "Quick Start" screen shown by 53, and on the screen shown by 53, prompt information "Bring the currently used electronic device near this device and ensure Bluetooth is enabled for easy setup" is displayed. Next, the new device displays a "Connection Verification" screen shown by 54, and displays a visible light image and prompt information "Place the pattern below within the viewfinder of the other device in use" on the screen shown by 54. The visible light image is generated based on a connection code. The connection code may be used for authorization authentication between the new device and the old device. It can be seen from FIG. 5(a)-1 to FIG. 5(a)-17 that the visible light image on the screen shown by 54 is annular. In addition, during specific implementation, the visible light image may be further dynamically displayed by adjusting color gamut, brightness, and/or the like.

After the new device displays the screen shown by 54, the old device may display a screen shown by 513. On the screen shown by 513, a screen currently displayed by the old device is a lock screen, and a "Scan to Verify" screen is displayed as a dialog over the lock screen. On the "Scan to Verify" screen that is displayed as a dialog, the viewfinder and prompt information "Align the viewfinder with the pattern on the new device" are displayed. In this case, the user may align, based on the prompt information, the viewfinder displayed by the old device with the visible light image displayed on the screen of the new device 54 for scanning.

After the old device scans the visible light image, the new device may display a "Verify Lock Screen Password" screen shown by 55. The screen shown by 55 displays prompt information "Please enter the lock screen password of 'A's Nova8 Pro' for security verification" and "The password you entered will be used as the password of this new device". Next, the user may enter the lock screen password of 'A's Nova8 Pro' on the screen shown by 55. In this way, not only the identity of the user can be further confirmed to improve the security of data import, but also the lock screen password of the old device currently used by the user can be directly set as the lock screen password of the new device. Therefore, in a configuration process of the new device, the user does not need to perform an operation of setting a lock screen password on the new device. The user is also familiar with operations in a subsequent process of using the new device, enjoying a seamless experience. In addition, in this embodiment, after the lock screen password is verified, the new device logs in to a user account that is logged in to on the old device, so that in the configuration process of the new device, the user does not need to perform an account login operation on the new device. Next, if the user chooses to import data from a cloud backup, the new device may directly import cloud backup data associated with the user account to the new device.

After the new device displays the "Verify Lock Screen Password" screen shown by 55, the old device may display a screen shown by 514. On the screen shown by 514, a screen currently displayed by the old device is also a lock screen. A screen is displayed as a dialog over the lock screen, and prompt information "Operate on the new device" and prompt information "Setting up the new device. Keep this device near the new device." are displayed on the screen that is displayed as a dialog.

After the new device displays the screen shown by 55, the new device may display a "Data Import" screen shown by 56. The screen shown by 56 displays prompt information "Choose data transfer method: directly import from 'A's Nova8 Pro' or download from the cloud backup", and further displays two icons: "Directly import from in-use device" and "Download from cloud backup". If the user selects the icon of "Directly import from in-use device" on the screen shown by 56, the new device displays a "Data Import" screen shown by 57. The screen shown by 57 displays prompt information "'A's Nova8 Pro' verified. Ready to transfer all content below." and three icons "Basic Data", "Application Data", and "System Settings". The user can tap the three icons to view detailed information about each type of data. In addition, a "Start Import" icon is further displayed on the screen shown by 57. After the user taps the "Start Import" icon, the data import process starts, and the new device displays an "Importing Data" screen shown by 58. On the screen shown by 58, the new device displays prompt information "Importing data from 'A's Nova8 Pro'. Restoration automatically completes after import." and "Importing data. Restoration will complete shortly. Please keep device powered and maintain network connection." The screen shown by 58 further displays a progress bar of data import. After the data import is complete, the new device displays a screen shown by 59, indicating that the configuration process of the new device is complete. A "Start Now" icon is displayed on the screen shown by 59. After the user taps the "Start Now" icon, the new device displays the home screen. After the new device displays the screen shown by 57, the old device may display a screen shown by 515. On the screen shown by 515, a screen currently displayed by the old device is the lock screen. The "Importing data" screen is displayed as a dialog on the lock screen, and prompt information "Keep this device near the new device during data import" is displayed on the "Importing data" screen displayed as a dialog. After the data import is complete, the old device may display a screen shown by 516. On the screen shown by 516, a screen currently displayed on the old device is a lock screen. An "Enjoy your new phone" screen is displayed as a dialog over the lock screen. On the "Enjoy your new phone" screen that is displayed as a dialog, prompt information "All data has been imported into the new phone" is displayed.

If the user selects the icon of "Download from cloud backup" on the screen shown by 56, the new device displays a "Data Import" screen shown by 510. The screen shown by 510 displays prompt information "Cloud backup data of 'A's Nova8 Pro' verified. Ready to transfer all content below." and three icons "Basic Data", "Application Data", and "System Settings". The user can tap the three icons to view detailed information about each type of data. In addition, the screen shown by 510 further displays the "Start Import" icon. After the user taps the "Start Import" icon, the data import process starts, and the new device displays an "Importing Data" screen shown by 511. On the screen shown by 511, the new device displays prompt information "Downloading and restoring data from the cloud backup of 'A's Nova8 Pro'" and "Your data is being downloaded to this device via WLAN. Restoration will complete shortly. Please keep device powered and maintain network connection." The screen shown by 511 further displays a progress bar of data import. After the data import is complete, the new device displays a screen shown by 59, indicating that the configuration process of the new device is complete. A "Start Now" icon is displayed on the screen shown by 59. After the user taps the "Start Now" icon, the new device displays the home screen. After the new device displays the screen shown by 510, the old device may display a screen shown by 517. On the screen shown by 517, a screen currently displayed on the old device is a lock screen. An "Enjoy your new phone" screen is displayed as a dialog over the lock screen. On the "Enjoy your new phone" screen that is displayed as a dialog, prompt information "Your data is being downloaded to the new phone via WLAN. Setup will complete shortly." is displayed.

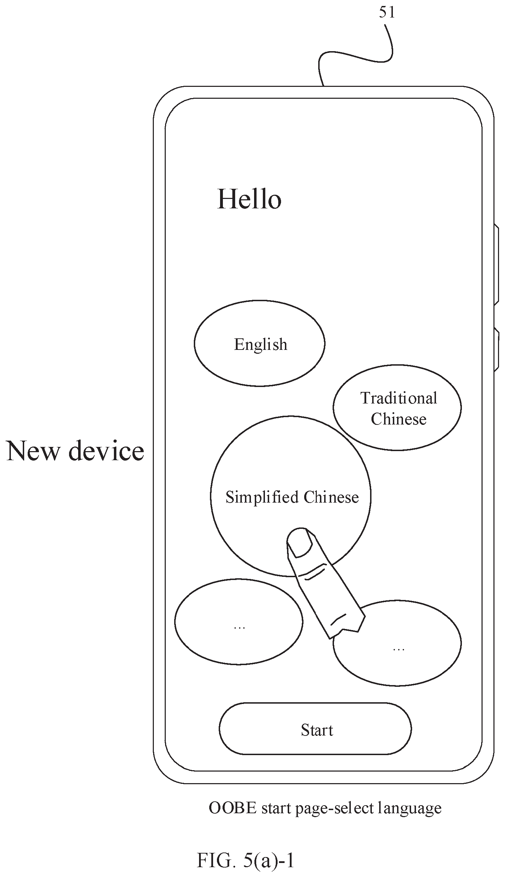

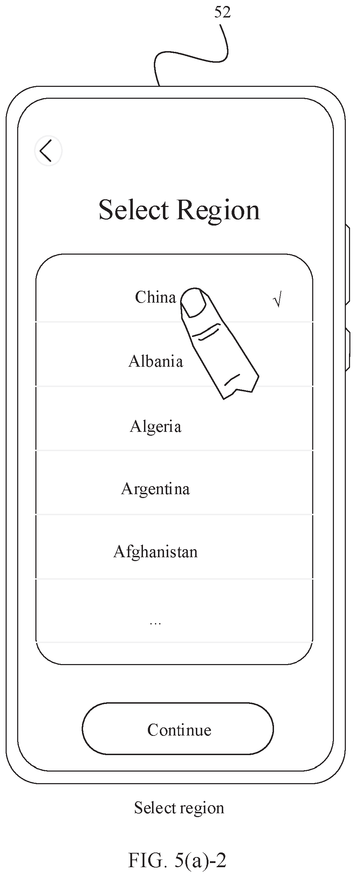

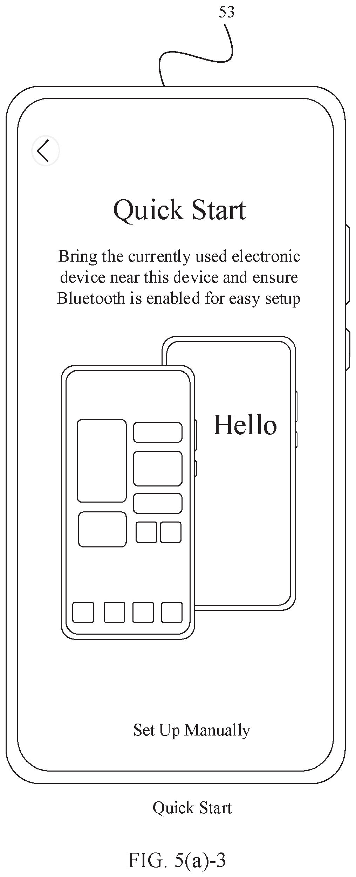

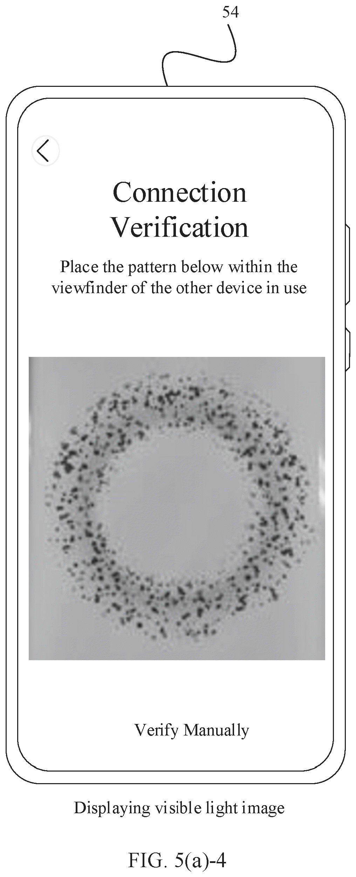

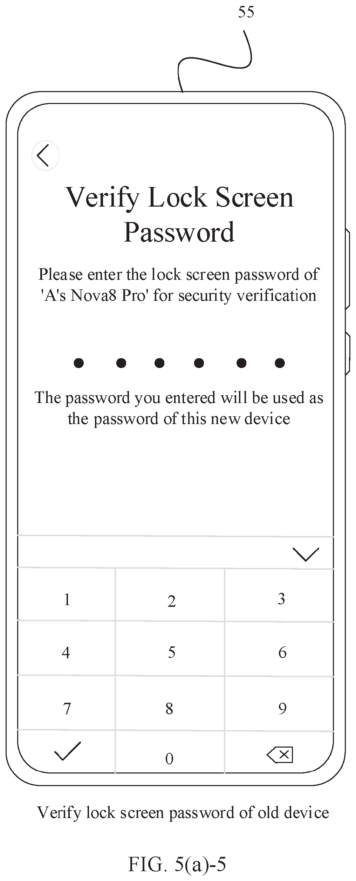

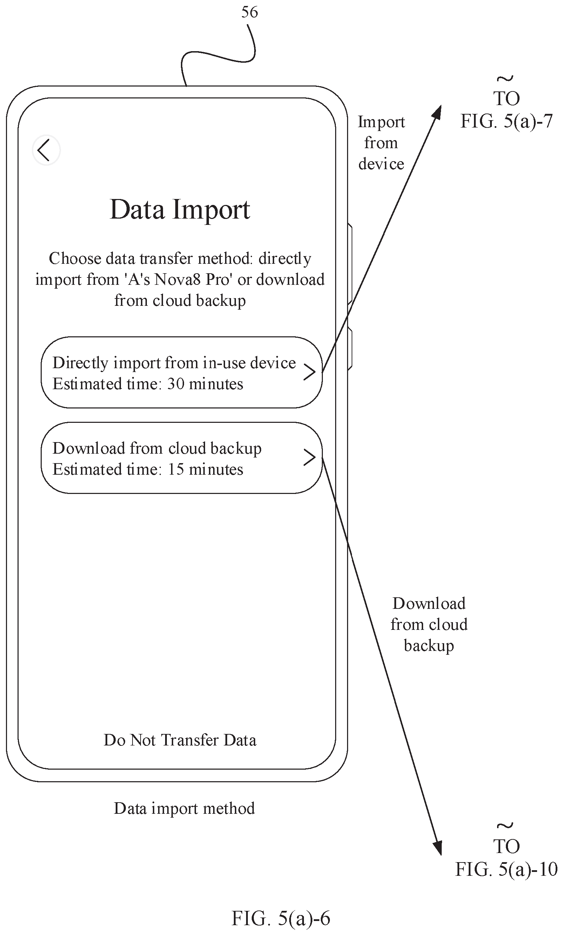

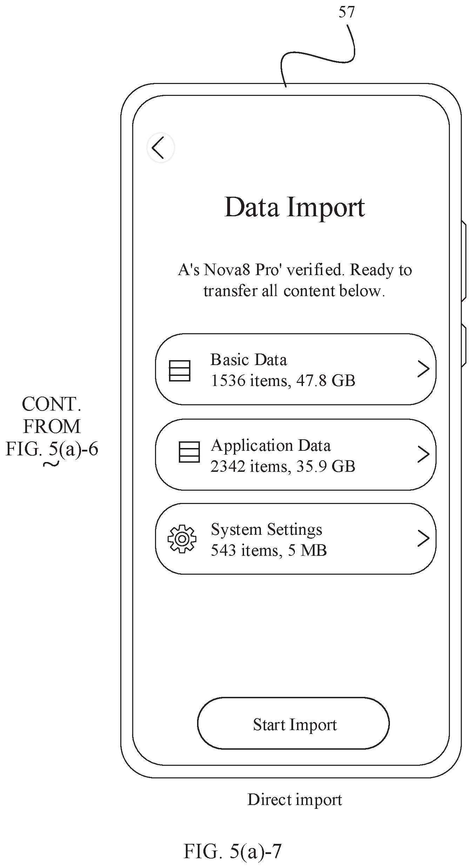

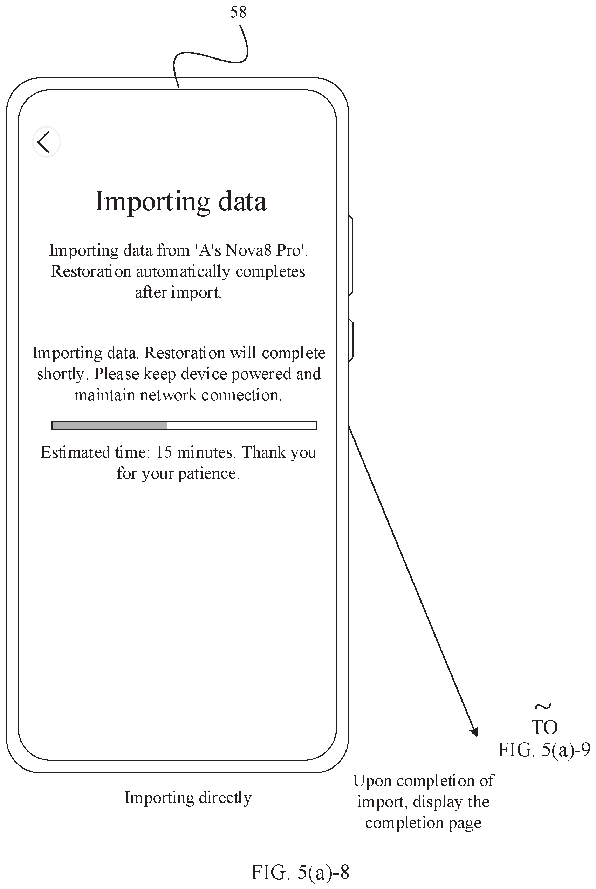

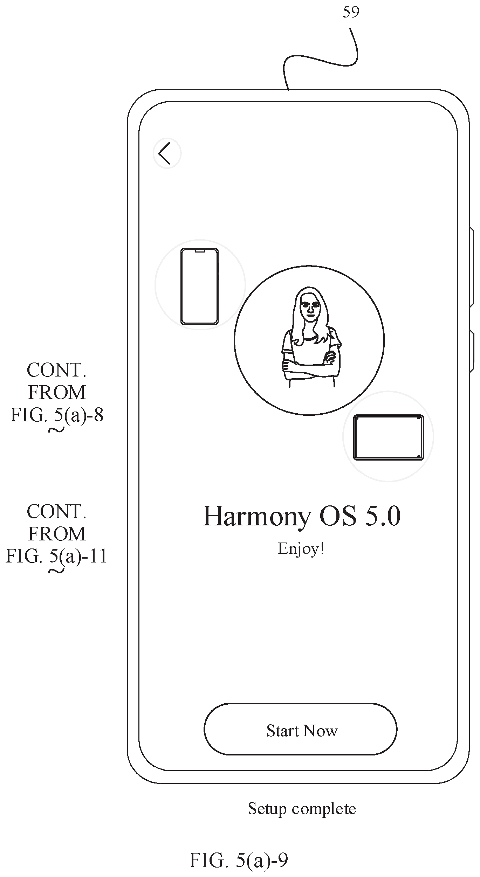

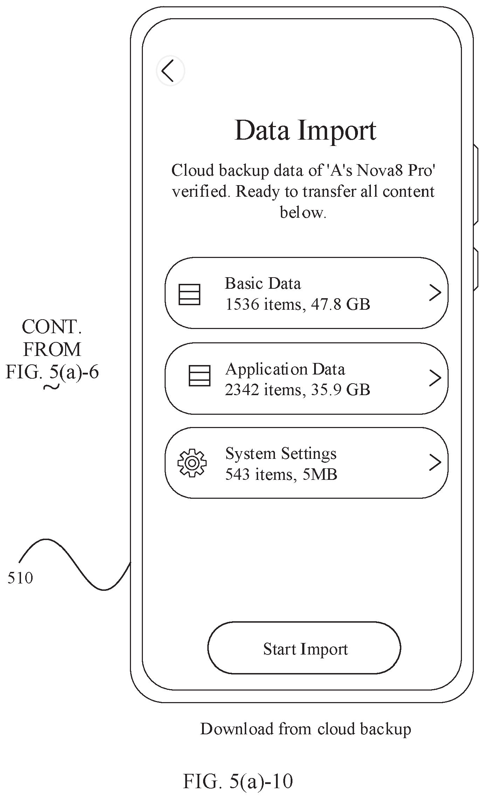

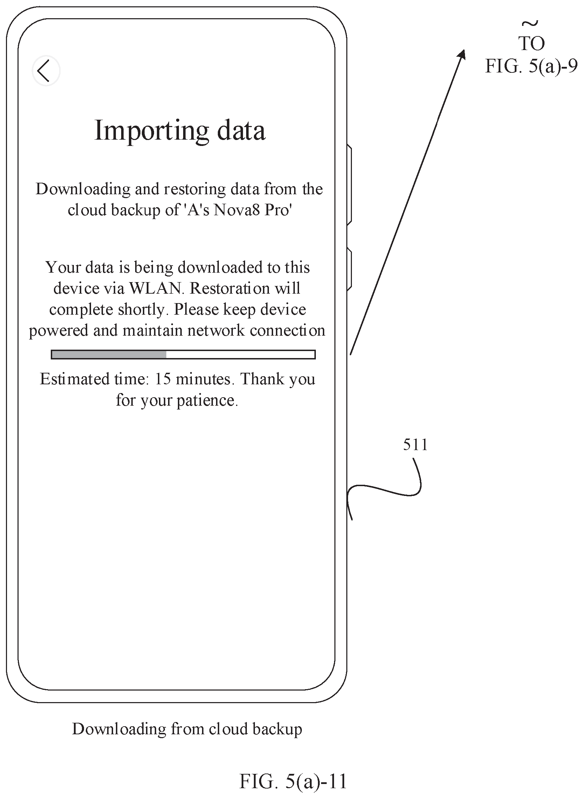

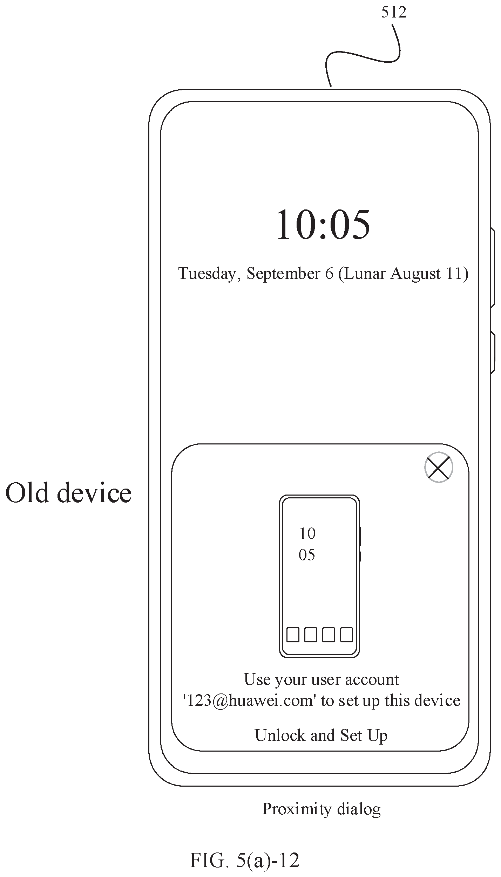

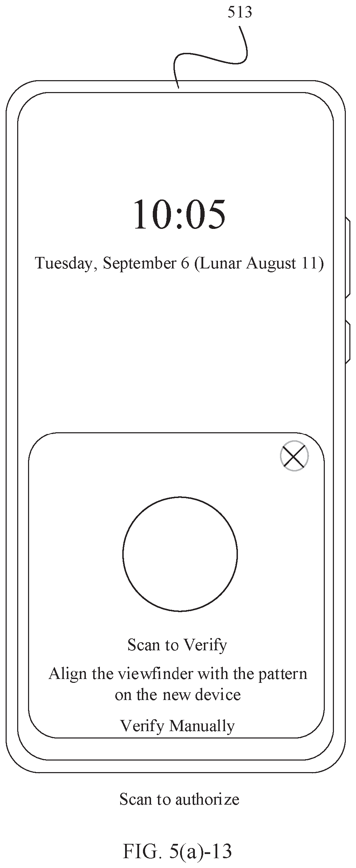

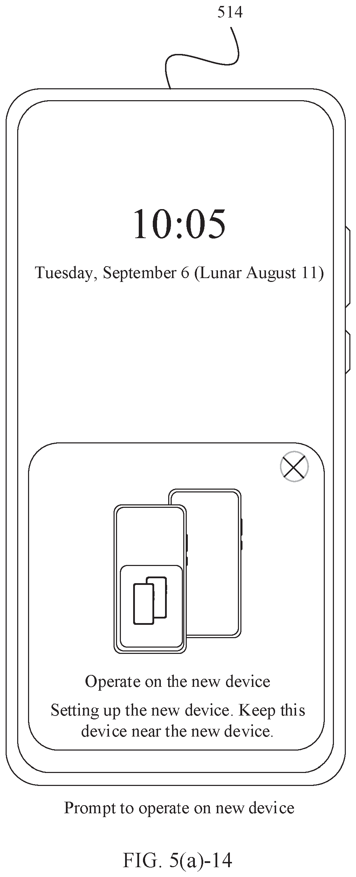

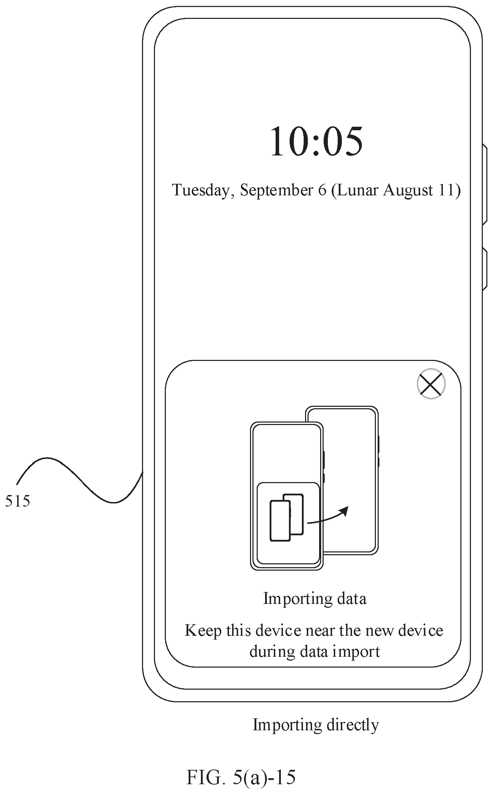

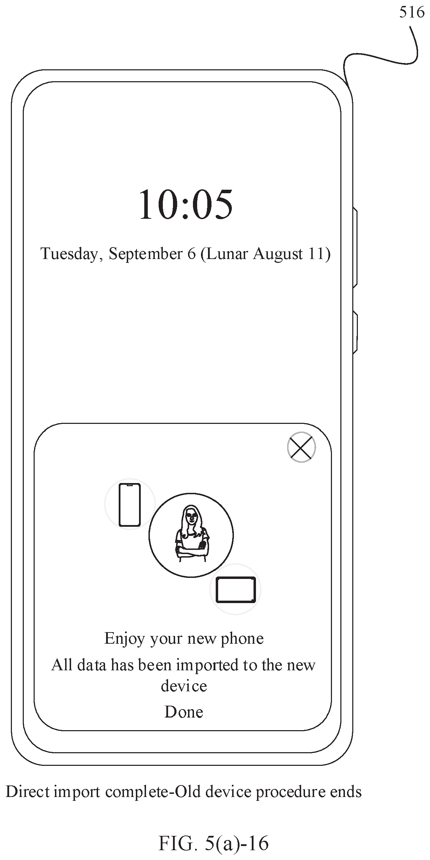

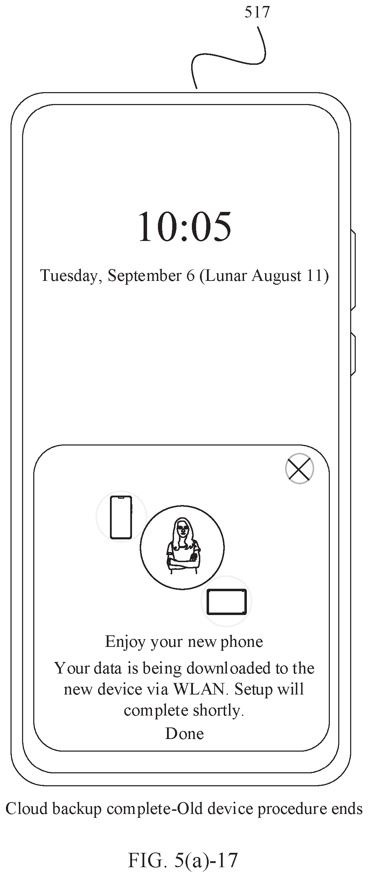

It can be learned from the foregoing process that, in the configuration process of the new device in the embodiments of this application, an operation procedure of a user may be shown in FIG. 5(b). FIG. 5(b) is a diagram of an operation procedure of a user in a configuration process of the new device according to an embodiment of this application. It can be seen from FIG. 5(b) that a configuration process of the new device includes a discovery phase, a pairing/setup phase, and a data import phase. In the discovery phase, the user selects a language and a region on the new device, and then the new device displays the "Quick Start" screen, as shown by 53 in FIG. 5(a)-3. The user taps the "Unlock and Set Up" button on the screen shown by 512 displayed on the old device. Next, the old device enters a connecting state and establishes a Bluetooth connection with the new device. Subsequently, in the pairing/setup phase, the new device displays a visible light image, verifies a lock screen password, and creates a lock screen password. Next, the new device connects to a network and enters a setting process. The old device scans the visible light image displayed by the new device to obtain a connection code carried in the visible light image. Subsequently, authorization authentication may be performed with the new device based on the connection code. Finally, in the data import phase, the user chooses a data import method, and views/selects data on the new device. Next, a data import operation is performed on the new device. In this phase, no operation is performed on the old device, and all operations are performed on the new device.

It can be learned from FIG. 5(a)-1 to FIG. 5(a)-17and FIG. 5(b) that, in the embodiments of this application, in the configuration process of the new device, the user only needs to perform four operations of "selecting a language", "selecting a region", "entering a lock screen password", and "choosing a data import method" on the new device and performing two operations of confirming a proximity dialog and scanning a visible light image on the old device to complete the configuration process of the new device and import data of the old device or the cloud backup into the new device. A configuration procedure of the new device and a cloning procedure are integrated to complete seamless configuration of the new device.

FIG. 6 is a diagram of interaction between a new device and an old device in a configuration process of the new device according to an embodiment of this application. As shown in FIG. 6, the following steps may be included.

Step 601: The new device enters a new-device configuration application and triggers Bluetooth advertising.

In this step, after the new device is powered on for the first time, the new device may run the new-device configuration application OOBE to trigger Bluetooth advertising. In this case, the new device may display the screen shown by 51.

Step 602: The new device sends a BLE advertising packet.

Step 603: After receiving the BLE advertising packet sent by the new device, an old device performs Bluetooth ranging, and displays a dialog screen.

In this step, the old device may display the screen shown by 512, and the dialog screen shown by 512 includes the "Unlock and Set Up" button.

Step 604: A "Set up" button in the dialog is tapped.

In this step, after the old device displays the screen shown by 512, a user taps the "Unlock and Set Up" button on the dialog screen shown by 512, indicating that the user confirms establishment of a Bluetooth connection with the new device.

Step 605: The old device establishes a BLE connection with the new device.

Step 606: The old device requests the new device to display a visible light image.

Step 607: The new device displays a visible light screen, where the visible light screen includes a visible light image.

In this step, the visible light screen displayed by the new device may be shown by 54, and the screen shown by 54 includes an annular visible light image.

Step 608: The new device notifies the old device that the visible light screen is displayed.

Step 609: The old device launches the camera and displays the viewfinder.

In this step, the old device may display the screen shown by 513. On the screen shown by 513, the viewfinder and the prompt information "Align the viewfinder with the pattern on the new device" are displayed on the "Scan to Verify" screen displayed as a dialog by the old device. In this case, the user may align, based on the prompt information, the viewfinder displayed by the old device with the visible light image displayed on the screen of the new device 54 for scanning.

Step 610: The old device completes scanning the visible light image.

In this step, after the old device scans the visible light image, a connection code may be obtained, and the connection code may be used for subsequent authorization authentication.

Step 611: The old device initiates the authorization authentication to the new device.

Step 612: The new device notifies the old device through BLE advertising interaction that the authorization authentication is complete.

Step 613: The authorization authentication is complete, and the old device displays a service screen.

In this step, after the authorization authentication is complete, the old device displays the service screen. The service screen may be shown by 514.

Step 614: The old device requests the new device to close the visible light screen.

Step 615: The new device stops displaying the visible light image.

Step 616: A cloning application on the old device initiates service interaction.

Step 617: The old device establishes a WiFi-P2P link with the new device.

In this embodiment, after the new device stops displaying the visible light image, the new device may display the screen shown by 56. If the user taps the icon "Directly import from in-use device" on the screen shown by 56, the old device wakes up the cloning application. The cloning application on the old device initiates service interaction. A high-speed data transmission channel may be established between the old device and the new device using a Wireless Fidelity Point-to-Point (WiFi peer to peer, WiFi-P2P) protocol. Certainly, during the establishment of the data transmission channel between the old device and the new device, besides the WiFi-P2P protocol, another protocol, for example, a Hypertext Markup Language (hypertext markup language, HTML) or another type of markup language, may be adopted. The protocol adopted to establish the data transmission channel between the old device and the new device is not limited in this embodiment.

Step 618: The new device and the old device perform multiple rounds of data exchange.

In this embodiment, after the data transmission channel is established between the old device and the new device, the old device and the new device may perform multiple rounds of data exchange. In addition, in this process, all data exchanged between the old device and the new device is data encrypted with a key.

In a process in which the new device and the old device perform data exchange, the new device may display the screens shown by 57 and 58, and the old device displays the screen shown by 515.

Step 619: The service is complete.

After the data import is complete, the new device may display the screen shown by 59, and the old device displays the screen shown by 517.

The following describes the data import method provided in the embodiments of this application with reference to a specific scenario.

FIG. 7A to FIG. 7D are flowcharts of a data import method according to an embodiment of this application. In this embodiment, a user has two in-use devices (that is, old devices), namely, an old device B and an old device C. An electronic device newly purchased by the user is a new device A. The following describes a configuration process of the new device A.

As shown in FIG. 7A to FIG. 7D, the data import method may include the following steps.

Step 701: A cloning application on the old device B registers a service capability with a package management application.

Specifically, that the cloning application on the old device B registers the service capability with the package management application may be that the cloning application sends a service identity (service identity, serviceID), a service name (serviceName), a device type of a new device, and a user interface ability name (user interface ability name, uiAbilityName) to the package management application.

Step 702: A service discovery module in the old device B initiates a query to the package management application for available service capabilities.

Step 703: The service discovery module in the old device B subscribes to BLE advertising from a Bluetooth module in the old device B.

Step 704: The new device A is powered on for the first time and enters guided configuration of the new device.

Step 705: A new-device configuration application on the new device A requests a cloning service from the service discovery module.

Step 706: A service discovery module in the new device A organizes a service request for a BLE advertising packet.

The BLE advertising packet carries an identifier of the new device A and a service requested by the new device A. In this example, the service requested by the new device A is a cloning service.

In this embodiment, the BLE advertising packet may be a generic advertising indication (Advertising Indication, ADV_IND) packet, and field information carried in the BLE advertising packet may be shown in Table 1.

**Table 1**

| Field | Value Description | Minimum Length (minimum length, MinLen) | Maximum Length (max lenth, MaxLen) |
|---|---|---|---|
| 0x12: newModelID | PC: T***; | 5 | |
| | Tablet computer: R0** to RW**; | | |
| | Mobile phone: P*** | | |
| 0x04: subModelID | | 2 | |
| 0x11: advPower | | 2 | |
| 0xFF: cust{ | | 1 | |
| T: 0x91 | T: 0xF0 (client (client) service identity, fixed ID mode) | 8 | |
| V: 7B | | | |
| | V: | | |
| | (1) udid_Hash L: 4 prefix | | |
| | (2) client service identity L: 2 (capacity: 65535) | | |
| | (3) seq: 0 to 255 | | |
| | total: | 18 | |
| | max: | 21 | |
| | Balance: | 3 | |

In Table 1, the field 0x12 is a product model identifier (newModelID) of the new device A. If the new device A is a PC, the value of the field 0x12 may be "T***". If the new device A is a tablet computer, the value of the field 0x12 may be "R0** to RW**". If the new device A is a mobile phone, the value of the field 0x12 may be "P***".

0x04: Sub-model identifier (subModelID). This field can be used to identify the color of the new device A.

0x11: advPower. The value of this field is an adaptation parameter for ranging.

0xFF: Separator.

T: 0x91. T is the type (type) value. 0xF0 is a specific type defined by the service. In this example, the type value is a client service identity.

V: 7B. V is the abbreviation of value (value). V includes three pieces of information as follows:
(1) udid_Hash: udid is the identifier of the new device A. For example, udid may be an international mobile equipment identity (international mobile equipment identity, IMEI) of the new device A. udid_Hash is a hash value of the identifier of the new device A.
(2) Client service identity indicates the service requested by the new device A. In this example, the value of the client service identity is 2, indicating that the service requested by the new device A is a cloning service.
(3) Sequence number (sequence, seq): The value ranges from 0 to 255.

Step 707: The service discovery module in the new device A sends the BLE advertising packet to a Bluetooth module in the new device A.

Step 708: The Bluetooth module in the new device A sends the BLE advertising packet, and the Bluetooth module in the old device B and a Bluetooth module in the old device C receive the BLE advertising packet.

Step 709: The Bluetooth module in the old device C reports the received BLE advertising packet to a service discovery module in the old device C.

Step 710: The service discovery module in the old device C determines a distance between the new device A and the old device C based on a ranging adaptation parameter in the BLE advertising packet.

Specifically, if the distance between the new device A and the old device C is less than or equal to a predetermined distance threshold, the old device C may determine that the distance between the new device A and the old device C is a proximity distance. The predetermined distance threshold may be customized during specific implementation. The predetermined distance threshold is not limited in this embodiment.

In this embodiment, the ranging adaptation parameter in the BLE advertising packet is the value of the field 0x11 in Table 1.

Step 711: The service discovery module in the old device C parses the BLE advertising packet, and determines that an application that can provide a cloning service exists in a package management application on the old device C.

Specifically, after the service discovery module in the old device C determines that the distance between the new device A and the old device C is the proximity distance, the service discovery module in the old device C determines that the application that can provide a cloning service exists in the package management application on the old device C.

Step 712: A confirmation dialog pops up on the old device C.

In this step, a screen displayed by the old device C may be shown by 512 in FIG. 5(a)-12.

Step 713: The Bluetooth module in the old device B reports the received BLE advertising packet to the service discovery module in the old device B.

Step 714: The service discovery module in the old device B determines a distance between the new device A and the old device B based on the ranging adaptation parameter in the BLE advertising packet.

Specifically, if the distance between the new device A and the old device B is less than or equal to the predetermined distance threshold, the old device B may determine that the distance between the new device A and the old device B is the proximity distance.

Step 715: The service discovery module in the old device B parses the BLE advertising packet, and determines that an application that can provide a cloning service exists in the package management application on the old device B.

Specifically, after the service discovery module in the old device B determines that the distance between the new device A and the old device B is the proximity distance, the service discovery module in the old device B determines that the application that can provide a cloning service exists in the package management application on the old device B.

Step 716: A confirmation dialog pops up on the old device B.

In this step, a screen displayed by the old device B may be shown by 512 in FIG. 5(a)-12.

During specific implementation, step 709 to step 712 and step 713 to step 716 may be performed sequentially, or may be performed concurrently. This embodiment does not limit an execution sequence of step 709 to step 712 and step 713 to step 716.

Step 717: The service discovery module in the old device B receives a user confirmation indication.

In this embodiment, the user may tap the "Unlock and Set Up" button on the screen shown by 512 displayed by the old device B, and in response to the operation of tapping the "Unlock and Set Up" button by the user, the service discovery module in the old device B determines to establish a Bluetooth connection with the new device A.

Step 718: The service discovery module in the old device B requests an authorization module in the old device B to display a visible light screen.

Step 719: The authorization module in the old device B establishes a BLE link with an authorization module in the new device A to establish a Bluetooth connection between the old device B and the new device A, and sends, to the authorization module in the new device A via the Bluetooth connection, a request for displaying a visible light screen.

Step 720: The authorization module in the new device A generates a connection code.

Step 721: The authorization module in the new device A sends the request for displaying a visible light screen to the service discovery module in the new device A, where the request for displaying a visible light screen carries the connection code.

Step 722: The service discovery module in the new device A sends a notification to a visible light display module in the new device A to display a visible light screen, where the notification carries the connection code.

Step 723: The visible light display module in the new device A generates a visible light image based on the connection code.

Step 724: The visible light display module in the new device A displays a visible light screen, where the visible light screen includes the visible light image.

Step 725: The visible light display module in the new device A notifies the service discovery module that the display succeeds.

Step 726: The service discovery module in the new device A notifies the new-device configuration application that it has been confirmed that the old device B can provide a cloning service.

Step 727: The new-device configuration application on the new device A cancels a service cloning request to the service discovery module.

Step 728: The service discovery module in the new device A notifies the Bluetooth module of a stop dialog broadcast.

Step 729: The Bluetooth module in the new device A sends the stop dialog broadcast, and the service discovery modules in the old device B and the old device C receive the stop dialog broadcast.

Step 730: Because the user has tapped Confirm on the dialog screen displayed by the old device B, the service discovery module in the old device B ignores the stop dialog broadcast.

Step 731: The service discovery module in the old device C cancels displaying the dialog screen.

Step 732: The service discovery module in the new device A requests the authorization module in the new device A to notify the peer end that the visible light screen is successfully displayed.

Step 733: The authorization module in the new device A sends a BLE packet to the authorization module in the old device B to notify the old device B that the visible light screen is successfully displayed.

Step 734: The authorization module in the old device B notifies the service discovery module in the old device B that the new device A has displayed the visible light screen.

Step 735: The service discovery module in the old device B notifies a visible light scanning module in the old device B to launch a code scanning frame.

Step 736: The visible light scanning module in the old device B displays a code scanning screen.

In this step, the code scanning screen displayed by the old device B may be shown by 513 in FIG. 5(a)-13.

Step 737: The visible light scanning module in the old device B scans the visible light image displayed by the new device A, and decodes the visible light image to obtain a connection code.

Step 738: The visible light scanning module in the old device B sends the connection code to the service discovery module in the old device B.

Step 739: The service discovery module in the old device B initiates an authorization request to the authorization module in the old device B, where the authorization request carries the connection code.

Step 740: The authorization module in the old device B sends a binding request to the authorization module in the new device A, where the binding request carries the connection code.

Specifically, when the authorization module in the old device B sends the binding request to the authorization module in the new device A, the Bluetooth connection established in step 719 may be reused.

Step 741: After binding the old device B with the new device A, the authorization module in the new device A sends a binding completion response to the authorization module in the old device B via the Bluetooth connection.

Step 742: The authorization module in the old device B sends a binding success response to the service discovery module.

Step 743: The service discovery module in the old device B notifies the visible light scanning module to close the code scanning frame.

Step 744: The service discovery module in the old device B sends an authorization success notification to the authorization module in the new device A through the authorization module in the old device B, and requests to close the visible light screen.

Step 745: The authorization module in the new device A notifies the service discovery module in the new device A that the authorization succeeds, and requests to close the visible light screen.

Step 746: The service discovery module in the new device A notifies the visible light display module in the new device A to close the visible light screen.

Step 747: The visible light display module in the new device A closes the visible light screen.

Step 748: The service discovery module in the old device B starts the cloning application on the old device B.

In this embodiment, the service discovery module in the old device B starts the cloning application, and the user does not need to search for and start the cloning application on the old device B, thereby simplifying operations of the user in a configuration process of the new device.

Step 749: The cloning application on the old device B establishes a data transmission channel with the new-device configuration application on the new device A, and the new device A imports data of the old device B into the new device A through the data transmission channel.

As described above, the cloning application on the old device B and the new-device configuration application on the new device A may establish a high-speed data transmission channel using the WiFi-P2P protocol. Certainly, during the establishment of the data transmission channel, besides the WiFi-P2P protocol, another protocol, for example, an HTML or another type of markup language, may be adopted. The protocol adopted to establish the data transmission channel is not limited in this embodiment.

In this embodiment, the data of the old device B may include one or a combination of the following: user account data for logging in to the old device B, configuration data of the old device B, an application installed on the old device B, and data of the application.

According to the data import method provided in this embodiment, when a user has an old device, a configuration procedure of a new device is streamlined. The user does not need to perform operations of selecting a network, setting a lock screen password, and logging in to a user account. A configuration process of the new device is integrated with a cloning process, and the user does not need to find and open cloning applications on the new device and the old device, thereby creating a seamless configuration experience of the new device for the user. In addition, a visible light manner providing a better experience is used in this embodiment for authorization authentication, so that an interaction experience of identifying a connection code for the user can be improved.

The following describes in detail a process in which the Bluetooth module in the new device A sends the BLE advertising packet and the Bluetooth module in the old device C reports the received BLE advertising packet to the service discovery module in the old device C in step 708 and step 709 in the embodiment shown in FIG. 7A to FIG. 7D of this application.

In the BLE protocol specification, as shown in FIG. 8, a scanning end (for example, the old device C) needs to receive an ADV_IND packet and a scan response (scan response, SCAN_RSP) packet before the scanning end can report the packets. When the duty cycle of BLE scanning is 10% (60/600 ms) or even lower, SCAN_RSP packets are often lost. As a result, packets fail to be reported, affecting metrics such as dialog success rate and dialog latency. FIG. 8 is a diagram of advertising reporting in the BLE protocol specification.

FIG. 9 is a diagram of advertising reporting according to an embodiment of this application. As shown in FIG. 9, in the embodiments of this application, the BLE protocol is modified for implementation. A scanning end (for example, the old device C) starts scanning, and after receiving an ADV_IND packet, reports the ADV_IND packet to Service Discovery. Next, after receiving an SCAN_RSP packet, the scanning end reports the SCAN_RSP packet to Service Discovery. That is, in this embodiment, the scanning end performs advertising reporting once after receiving the ADV_IND packet and once after receiving the SCAN_RSP packet. In addition, during specific implementation, the scan request (scan request) packet and the SCAN_RSP packet may alternatively be ignored. That is, after receiving the ADV_IND packet, the scanning end reports the ADV_IND packet to Service Discovery, so that Service Discovery establishes a Bluetooth connection with an advertising end based on the ADV_IND packet.

For an advertising scenario in which SCAN_RSP does not carry key data, in the embodiments of this application, an ADV_IND packet can trigger a dialog, so that proximity discovery latency is reduced, and the success rate of Bluetooth connections can be improved. In the scenario where SCAN_RSP carries key data, ADV_IND advertising can be used as a heartbeat packet to prevent the dialog ping-pong issue caused by SCAN_RSP packet loss.

The following describes a process in which the visible light display module in the new device A generates the visible light image based on the connection code in step 723 and a process in which the visible light scanning module in the old device B scans the visible light image displayed by the new device A, and decodes the visible light image in step 737 in the embodiment shown in FIG. 7A to FIG. 7D of this application.

FIG. 10 is a flowchart of displaying and decoding a visible light image according to an embodiment of this application. As shown in FIG. 10, a process of displaying a visible light image may include the following steps.

Step 1001: Generate an initial image based on the connection code.

In this embodiment, the initial image may be annular. Certainly, the initial image may alternatively be in another shape. The shape of the initial image is not limited in this embodiment.

Step 1002: Divide the initial image into at least two regions, and generate k information points in each region, where k is a positive integer, and k ≥ 1.

In this embodiment, the initial image after the division of regions may be shown in 10a.

Step 1003: Perform frequency error (parts per million, PPM) information encoding on the k information points.

Step 1004: Perform differential encoding on the encoded k information points to generate the visible light image.

During specific implementation, differential encoding may be performed on the encoded k information points based on random-phase frequency shift keying (frequency shift keying, FSK) modulation to generate the visible light image.

In addition, in this embodiment, after the visible light image is generated, the visible light image may be dynamically displayed implemented in a manner of color gamut complementation, brightness adjustment, and/or the like. The generated visible light image may be shown in 10b.

Step 1005: Display the visible light image.

Specifically, the visible light screen displayed by the new device A may be shown by 54 in FIG. 5(a)-4, and the annular image on the screen shown by 54 is the visible light image.

As shown in FIG. 10, a process of decoding the visible light image may include the following steps.

Step 1006: Obtain at least two image frames that include the visible light image.

For example, after scanning the visible light image displayed by the new device A, the visible light scanning module in the old device B may obtain three image frames including the visible light image.

Step 1007: Perform an inter-frame difference operation on the at least two image frames, and perform local threshold binarization on a result obtained by the difference operation to obtain a binarized image.

Step 1008: Obtain positioning point information based on the binarized image.

Step 1009: Obtain, based on the positioning point information, indices of at least two regions included in the visible light image and an information point in each region.

Step 1010: Perform error checking and correction and decoding on the information point in each region to obtain at least two connection codes and an error correction bit corresponding to each connection code.

Specifically, a frequency error algorithm may be used to perform error checking and correction and decoding on the information point in each region to obtain the at least two connection codes and the error correction bit corresponding to each connection code.

Step 1011: Merge the at least two connection codes and the error correction bit corresponding to each connection code to obtain an error-corrected connection code.

The following describes a process of decoding the visible light image using a specific example.

FIG. 11 is a diagram of a process of decoding a visible light image according to an embodiment of this application. As shown in FIG. 11, the visible light image displayed by the new device A may be shown by 1101. After scanning the visible light image 1101 displayed by the new device A, the visible light scanning module in the old device B may obtain three image frames including the visible light image. Next, the visible light scanning module in the old device B performs an inter-frame difference operation on the three image frames, and performs local threshold binarization on a result obtained by the difference operation to obtain a binarized image and the center of the ellipse, as shown by 1102.

Next, the visible light scanning module in the old device B obtains the positioning point information based on the binarized image and the center of the ellipse. As shown in 1103, the positioning point information may include data point coordinates, an index of the outer ring positioning point, an index of the inner ring positioning point, and the updated center of the ellipse. Next, the visible light scanning module in the old device B obtains, based on the positioning point information, the indices of the at least two regions included in the visible light image and the information points in each region. As shown in 1104, in this example, the visible light image includes 12 regions, and the information points in the 12 regions are a 12x12 two-dimensional array.

Finally, error checking and correction and decoding are performed on the information points in the 12 regions to obtain the at least two connection codes and the error correction bit corresponding to each connection code. As shown by 1105, in 1105, PINcode is the connection code, n_Error_final is the error correction bit corresponding to the connection code, and the connection code and the error correction bit corresponding to the connection code are both one-dimensional arrays with a length of 6. Next, the connection code shown by 1105 and the error correction bit corresponding to each connection code are merged to obtain the error-corrected connection code. As shown by 1106, it can be learned from 1106 that the accurate connection code is [1, 4, 8, 2, 5, 8], which is a one-dimensional array with a length of 6.

As described above, the embodiments of this application provide the data import method. When a user has an old device, a configuration procedure of a new device can be streamlined. A configuration process of the new device is integrated with a cloning process, and the user does not need to find and open cloning applications on the new device and the old device, thereby creating a seamless configuration experience of the new device for the user. In addition, a visible light manner providing a better experience is used in this embodiment for authorization authentication, so that an interaction experience of identifying a connection code for the user can be improved.

FIG. 12 is a flowchart of a data import method according to an embodiment of this application. As shown in FIG. 12, the data import method may include the following steps.

Step 1201: A first electronic device sends a Bluetooth advertising packet, where the Bluetooth advertising packet carries an identifier of the first electronic device and a first service requested by the first electronic device.

In this embodiment, the first electronic device may be a new device, for example, the new device A in the embodiment shown in FIG. 11.

The Bluetooth advertising packet may be a generic advertising indication packet, and the identifier of the first electronic device may be an IMEI of the first electronic device. Certainly, the identifier of the first electronic device may alternatively be an identifier in another form, provided that the first electronic device can be uniquely identified. A specific form of the identifier of the first electronic device is not limited in this embodiment. In addition, the Bluetooth advertising packet may carry an original value of the identifier of the first electronic device, or may carry a hash value of the identifier of the first electronic device. This is not limited in this embodiment. During specific implementation, field information carried in the Bluetooth advertising packet may be shown in Table 1.

Step 1202: The first electronic device receives a request that is for displaying a visible light screen and that is sent by a second electronic device via a Bluetooth connection.

The Bluetooth connection is established after the second electronic device, upon receiving the Bluetooth advertising packet, determines that the second electronic device has a capability of providing the first service and determines to establish a Bluetooth connection with the first electronic device.

In this embodiment, the second electronic device may be an old device used by a user, for example, the old device B in the embodiment shown in FIG. 11.

Step 1203: The first electronic device displays a visible light screen, where the visible light screen includes a visible light image.

The visible light image is generated based on a connection code.

In this embodiment, the visible light screen displayed by the first electronic device may be shown by 54 in FIG. 5(a)-4.

In some examples, before displaying the visible light screen, the first electronic device may further generate the connection code, and generate the visible light image based on the connection code. Specifically, for a process of generating the visible light image based on the connection code, refer to descriptions of step 1001 to step 1004 in the embodiment shown in FIG. 10. Details are not described herein again.

Step 1204: The first electronic device receives an authorization request sent by the second electronic device via the Bluetooth connection.

The authorization request is initiated after the second electronic device scans the visible light image on the visible light screen, decodes the visible light image, and obtains a connection code, and the authorization request carries the connection code obtained by the second electronic device.

Step 1205: The first electronic device performs authorization authentication with the second electronic device based on the connection code carried in the authorization request.

Specifically, the performing the authorization authentication with the second electronic device based on the connection code carried in the authorization request may be: The first electronic device matches the connection code carried in the authorization request against the connection code generated by the first electronic device. In this way, that the authorization authentication succeeds may be: the connection code carried in the authorization request successfully matches the connection code generated by the first electronic device. That the authorization authentication fails may be: the connection code carried in the authorization request fails to match the connection code generated by the first electronic device.

Step 1206: After the authorization authentication succeeds, the first electronic device establishes a data transmission channel between the first electronic device and the second electronic device, and imports data of the second electronic device into the first electronic device through the data transmission channel.

The data of the second electronic device may include one or a combination of the following: user account data for logging in to the second electronic device, configuration data of the second electronic device, an application installed on the second electronic device, and data of the application.

Specifically, after the authorization authentication succeeds, the first electronic device and the second electronic device mutually determine each other as trusted devices, and the first electronic device may log in to a user account to which the second electronic device logs in, so that in a configuration process of the new device, the user does not need to perform an account login operation on the first electronic device.

In some examples, after the authorization authentication succeeds, the first electronic device may further receive a notification that is for closing the visible light screen and that is sent by the second electronic device via the Bluetooth connection. The first electronic device closes the visible light screen in response to receiving the notification.

In some examples, before the first electronic device establishes the data transmission channel between the first electronic device and the second electronic device and after the authorization authentication succeeds, the first electronic device may further display a lock screen password verification screen, where the lock screen password verification screen includes prompt information for entering a lock screen password of the second electronic device. The screen may be shown by 55 in FIG. 5(a)-5. Next, the first electronic device may obtain a lock screen password entered by the user using the first electronic device, and send the lock screen password entered by the user to the second electronic device. After a notification that indicates that the lock screen password entered by the user is correct and that is sent by the second electronic device is received, the lock screen password entered by the user is set as a lock screen password of the first electronic device, so that the user does not need to perform an operation of setting a lock screen password on the first electronic device.

In the foregoing data import method, the first electronic device sends the Bluetooth advertising packet, where the Bluetooth advertising packet carries the identifier of the first electronic device and the first service requested by the first electronic device. The first electronic device then receives the request that is for displaying a visible light screen and that is sent by the second electronic device via the Bluetooth connection, and displays the visible light screen. The visible light screen includes the visible light image. Next, the first electronic device receives the authorization request sent by the second electronic device via the Bluetooth connection, and performs the authorization authentication with the second electronic device based on the connection code carried in the authorization request. After the authorization authentication succeeds, the first electronic device establishes the data transmission channel between the first electronic device and the second electronic device, and imports the data of the second electronic device into the first electronic device through the data transmission channel, so that when a user has an old device, a configuration procedure of a new device is streamlined, a configuration process of the new device is integrated with a cloning process, and the user does not need to find and open cloning applications on the new device and the old device, thereby creating a seamless configuration experience of the new device for the user. In addition, a visible light manner providing a better experience is used in this embodiment for authorization authentication, so that an interaction experience of identifying a connection code for the user can be improved.

FIG. 13 is a flowchart of a data import method according to another embodiment of this application. As shown in FIG. 13, the data import method may include the following steps.

Step 1301: A second electronic device receives a Bluetooth advertising packet sent by a first electronic device.

The Bluetooth advertising packet carries an identifier of the first electronic device and a first service requested by the first electronic device.

In this embodiment, the second electronic device may be an old device used by a user, for example, the old device B in the embodiment shown in FIG. 11. The first electronic device may be a new device of the user, for example, the new device A in the embodiment shown in FIG. 11.

Step 1302: The second electronic device determines that the second electronic device has a capability of providing the first service, determines to establish a Bluetooth connection with the first electronic device, and then establishes a Bluetooth connection between the second electronic device and the first electronic device.

In some examples, the Bluetooth advertising packet further carries a ranging adaptation parameter; and before determining that the second electronic device has a capability of providing the first service, the second electronic device may further determine, based on the ranging adaptation parameter in the Bluetooth advertising packet, that a distance between the first electronic device and the second electronic device is less than or equal to a predetermined distance threshold. The predetermined distance threshold may be customized during specific implementation. The predetermined distance threshold is not limited in this embodiment.

In some examples, that the second electronic device determines to establish a Bluetooth connection with the first electronic device may be: The second electronic device obtains a determination indication for establishing a Bluetooth connection with the first electronic device, where the determination indication is input by a user using the second electronic device on a setting screen displayed by the second electronic device. Specifically, after the second electronic device determines that the distance between the first electronic device and the second electronic device is less than or equal to the predetermined distance threshold, the second electronic device may display the screen shown by 512 in FIG. 5(a)-12. The screen 512 includes the "Unlock and Set Up" button. The user taps the button, indicating that the user confirms establishment of a Bluetooth connection with the first electronic device. Therefore, in response to the operation of tapping the "Unlock and Set Up" button on the screen 512 by the user, the second electronic device obtains the determination indication for establishing a Bluetooth connection with the first electronic device.

Step 1303: The second electronic device sends, to the first electronic device via the Bluetooth connection, a request for displaying a visible light screen.

Step 1304: After the first electronic device displays a visible light screen, the second electronic device scans a visible light image on the visible light screen.

In some examples, before scanning the visible light image on the visible light screen, the second electronic device may further receive a notification that indicates that the visible light screen is successfully displayed and that is sent by the first electronic device via the Bluetooth connection. The second electronic device then displays a code scanning screen, where the code scanning screen includes a code scanning frame. In this embodiment, the code scanning screen displayed by the second electronic device may be shown by 513 in FIG. 5(a)-13. Next, the user may align the code scanning frame displayed by the second electronic device with the visible light image displayed by the first electronic device for scanning.

Step 1305: The second electronic device decodes the visible light image to obtain a connection code.

Specifically, for a process in which the second electronic device decodes the visible light image to obtain the connection code, refer to descriptions of step 1006 to step 1011 in the embodiment shown in FIG. 10. Details are not described herein again.

Step 1306: The second electronic device sends an authorization request to the first electronic device via the Bluetooth connection.

The authorization request carries the connection code, so that the first electronic device performs authorization authentication on the second electronic device based on the connection code.

Step 1307: After the authorization authentication succeeds, the second electronic device establishes a data transmission channel between the second electronic device and the first electronic device, and imports data of the second electronic device into the first electronic device through the data transmission channel.

In this embodiment, the determining that the second electronic device has the capability of providing the first service may be: The second electronic device determines that the second electronic device has an application that provides the first service. In this way, after the authorization authentication succeeds, the second electronic device may start the application that provides the first service on the second electronic device. For example, the first service may be a cloning service. In this way, after the authorization authentication succeeds, the second electronic device may start a cloning application on the second electronic device, so that the user does not need to find and start a cloning application on the old device, thereby creating a seamless configuration experience of the new device for the user.

In the foregoing data import method, the second electronic device receives the Bluetooth advertising packet sent by the first electronic device, determines that the second electronic device has the capability of providing the first service, and determines to establish a Bluetooth connection with the first electronic device. Next, the second electronic device establishes the Bluetooth connection between the second electronic device and the first electronic device, and then sends, to the first electronic device via the Bluetooth connection, the request for displaying a visible light screen. After the first electronic device displays the visible light screen, the second electronic device scans the visible light image on the visible light screen, and decodes the visible light image to obtain the connection code. The second electronic device then sends the authorization request to the first electronic device via the Bluetooth connection. After the authorization authentication succeeds, the second electronic device establishes the data transmission channel between the second electronic device and the first electronic device, and imports the data of the second electronic device into the first electronic device through the data transmission channel, so that when a user has an old device, a configuration procedure of a new device is streamlined, a configuration process of the new device is integrated with a cloning process, and the user does not need to find and open cloning applications on the new device and the old device, thereby creating a seamless configuration experience of the new device for the user. In addition, a visible light manner providing a better experience is used in this embodiment for authorization authentication, so that an interaction experience of identifying a connection code for the user can be improved.

It can be understood that some or all of the steps or operations in the foregoing embodiments are merely examples, and other operations or variants of various operations may be further performed in this embodiment of this application. In addition, the steps may be performed in another order different from that presented in the foregoing embodiments, and not all the operations in the foregoing embodiments may be performed.

It may be understood that, to implement the foregoing functions, the electronic device includes corresponding hardware and/or software modules for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In this embodiment, the electronic device may be divided into functional modules according to the foregoing method embodiments. For example, each functional module may be obtained through division based on each corresponding function, or two or more functions may be integrated into one module. The integrated module may be implemented in a form of hardware. It should be noted that module division in embodiments is an example and is merely logical function division. In practice, there may be another division manner.

FIG. 14 is a diagram of a structure of an electronic device according to another embodiment of this application. When each functional module is obtained through division based on each corresponding function, FIG. 14 is a diagram of a possible composition of an electronic device 1400 in the foregoing embodiment. As shown in FIG. 14, the electronic device 1400 may include a receiving unit 1401, a processing unit 1402, and a sending unit 1403.

The receiving unit 1401 may be configured to support the electronic device 1400 in performing step 1202, step 1204, step 1206, and the like, or configured to support the electronic device 1400 in performing step 1301, step 1307, and the like.

The processing unit 1402 may be configured to support the electronic device 1400 in performing step 1203, step 1205, and the like, or configured to support the electronic device 1400 in performing step 1302, step 1304, step 1305, and the like.

The sending unit 1403 may be configured to support the electronic device 1400 in performing step 1201, step 1206, and the like, or configured to support the electronic device 1400 in performing step 1303, step 1306, step 1307, and the like.

It should be noted that all related content of the steps in the foregoing method embodiments may be cited in functional description of corresponding functional modules. Details are not described herein again.

The electronic device 1400 provided in this embodiment is configured to perform the foregoing data import method, and therefore can achieve the same effect as the foregoing method.

It should be understood that the electronic device 1400 may correspond to the electronic device 100 shown in FIG. 3. The functions of the receiving unit 1401 and the sending unit 1403 may be implemented by the processor 110, the antenna 1, and the mobile communication module 150 and/or may be implemented by the processor 110, the antenna 2, and the wireless communication module 160 in the electronic device 100 shown in FIG. 3. The function of the processing unit 1402 may be implemented by the processor 110, the touch sensor 180K, the camera 193, and the display 194 in the electronic device 100 shown in FIG. 3.

When an integrated unit is used, the electronic device 1400 may include a processing module, a storage module, and a communication module.

The processing module may be configured to control and manage an action of the electronic device 1400, for example, may be configured to support the electronic device 1400 in performing the steps performed by the receiving unit 1401, the processing unit 1402, and the sending unit 1403. The storage module may be configured to support the electronic device 1400 to store program code, data, and the like. The communication module may be configured to support the electronic device 1400 in communicating with another device.

The processing module may be a processor or a controller, and may implement or execute various example logic blocks, modules, and circuits described with reference to content disclosed in this application. The processor may alternatively be a combination for implementing a computing function, for example, a combination including one or more microprocessors or a combination of a digital signal processing (digital signal processing, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor and the storage module is a memory, the electronic device 1400 in this embodiment may be a device with the structure shown in FIG. 3.

Embodiments of this application further provide a computer-readable storage medium. The computer-readable storage medium stores a computer program. When the computer program is run on a computer, the computer is enabled to perform the method provided in the embodiments shown in FIG. 12 and FIG. 13 in this application.

Embodiments of this application further provide a computer program product. The computer program product includes a computer program. When the computer program is run on a computer, the computer is enabled to perform the method provided in the embodiments shown in FIG. 12 and FIG. 13 in this application.

In the embodiments of this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists. A and B may be singular or plural. The character "/" generally indicates an "or" relationship between the contextual objects. "At least one of the following" and similar expressions thereof refer to any combination of these items, including any combination of a single item or a plurality of items. For example, at least one of a, b, or c may indicate a, b, c, a and b, a and c, b and c, or a, b, and c, where a, b, and c may be singular or plural.

A person of ordinary skill in the art may be aware that the units and algorithm steps described in the embodiments disclosed in this specification can be implemented by a combination of electronic hardware, computer software, and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored on a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the scope of protection of this application. Therefore, the scope of protection of this application shall be subject to the scope of protection of the claims.

## Claims

1. A data import method, comprising:
sending, by a first electronic device, a Bluetooth advertising packet, wherein the Bluetooth advertising packet carries an identifier of the first electronic device and a first service requested by the first electronic device;
receiving a request that is for displaying a visible light screen and that is sent by a second electronic device via a Bluetooth connection, wherein the Bluetooth connection is established after the second electronic device, upon receiving the Bluetooth advertising packet, determines that the second electronic device has a capability of providing the first service and determines to establish a Bluetooth connection with the first electronic device;
displaying a visible light screen, wherein the visible light screen comprises a visible light image, and the visible light image is generated based on a connection code;
receiving an authorization request sent by the second electronic device via the Bluetooth connection, wherein the authorization request is initiated after the second electronic device scans the visible light image on the visible light screen, decodes the visible light image, and obtains a connection code, and the authorization request carries the connection code obtained by the second electronic device;
performing authorization authentication with the second electronic device based on the connection code carried in the authorization request; and
after the authorization authentication succeeds, establishing a data transmission channel between the first electronic device and the second electronic device, and importing data of the second electronic device into the first electronic device through the data transmission channel.

2. The method according to claim 1, wherein the data of the second electronic device comprises one or a combination of the following: user account data for logging in to the second electronic device, configuration data of the second electronic device, an application installed on the second electronic device, and data of the application.

3. The method according to claim 1, wherein before the displaying the visible light screen, the method further comprises:
generating the connection code; and
generating the visible light image based on the connection code.

4. The method according to claim 3, wherein the generating the visible light image based on the connection code comprises:
generating an initial image based on the connection code;
dividing the initial image into at least two regions, and generating k information points in each region, wherein k is a positive integer, and k ≥ 1;
performing frequency error information encoding on the k information points; and
performing differential encoding on the encoded k information points to generate the visible light image.

5. The method according to claim 1, wherein the performing the authorization authentication with the second electronic device based on the connection code carried in the authorization request comprises:
matching the connection code carried in the authorization request against the connection code generated by the first electronic device, wherein
that the authorization authentication succeeds comprises: the connection code carried in the authorization request successfully matches the connection code generated by the first electronic device.

6. The method according to claim 1, further comprising:
after the authorization authentication succeeds, receiving a notification that is for closing the visible light screen and that is sent by the second electronic device via the Bluetooth connection; and
closing the visible light screen in response to receiving the notification.

7. The method according to claim 1, wherein before the establishing the data transmission channel between the first electronic device and the second electronic device, the method further comprises:
after the authorization authentication succeeds, displaying a lock screen password verification screen, wherein the lock screen password verification screen comprises prompt information for entering a lock screen password of the second electronic device;
obtaining a lock screen password entered by a user using the first electronic device;
sending the lock screen password entered by the user to the second electronic device; and
after a notification that indicates that the lock screen password entered by the user is correct and that is sent by the second electronic device is received, setting the lock screen password entered by the user as a lock screen password of the first electronic device.

8. The method according to any one of claims 1 to 7, wherein the Bluetooth advertising packet comprises a generic advertising indication packet.

9. A data import method, comprising:
receiving, by a second electronic device, a Bluetooth advertising packet sent by a first electronic device, wherein the Bluetooth advertising packet carries an identifier of the first electronic device and a first service requested by the first electronic device;
determining that the second electronic device has a capability of providing the first service, determining to establish a Bluetooth connection with the first electronic device, and then establishing a Bluetooth connection between the second electronic device and the first electronic device;
sending, to the first electronic device via the Bluetooth connection, a request for displaying a visible light screen;
after the first electronic device displays the visible light screen, scanning a visible light image on the visible light screen;
decoding the visible light image to obtain a connection code;
sending an authorization request to the first electronic device via the Bluetooth connection, wherein the authorization request carries the connection code, so that the first electronic device performs authorization authentication on the second electronic device based on the connection code; and
after the authorization authentication succeeds, establishing a data transmission channel between the second electronic device and the first electronic device, and importing data of the second electronic device into the first electronic device through the data transmission channel.

10. The method according to claim 9, wherein the decoding the visible light image to obtain the connection code comprises:
obtaining at least two image frames that comprise the visible light image;
performing an inter-frame difference operation on the at least two image frames, and performing local threshold binarization on a result obtained by the difference operation to obtain a binarized image;
obtaining positioning point information based on the binarized image;
obtaining, based on the positioning point information, indices of at least two regions comprised in the visible light image and an information point in each region;
performing error checking and correction and decoding on the information point in each region to obtain at least two connection codes and an error correction bit corresponding to each connection code; and
merging the at least two connection codes and the error correction bit corresponding to each connection code to obtain an error-corrected connection code.

11. The method according to claim 9, wherein the Bluetooth advertising packet further carries a ranging adaptation parameter; and before the determining that the second electronic device has the capability of providing the first service, the method further comprises:
determining, based on the ranging adaptation parameter in the Bluetooth advertising packet, that a distance between the first electronic device and the second electronic device is less than or equal to a predetermined distance threshold.

12. The method according to claim 9, wherein the determining to establish the Bluetooth connection with the first electronic device comprises:
obtaining a determination indication for establishing a Bluetooth connection with the first electronic device, wherein the determination indication is input by a user using the second electronic device on a setting screen displayed by the second electronic device.

13. The method according to claim 9, wherein before the scanning the visible light image on the visible light screen, the method further comprises:
receiving a notification that indicates that the visible light screen is successfully displayed and that is sent by the first electronic device via the Bluetooth connection; and
displaying a code scanning screen, wherein the code scanning screen comprises a code scanning frame.

14. The method according to claim 9, wherein the determining that the second electronic device has the capability of providing the first service comprises:
determining that the second electronic device has an application that provides the first service; and
the method further comprises:
after the authorization authentication succeeds, starting the application that provides the first service on the second electronic device.

15. A first electronic device, comprising:
one or more processors, a memory, a plurality of applications, and one or more computer programs, wherein the one or more computer programs are stored in the memory, the one or more computer programs comprise instructions, and when the instructions are executed by the first electronic device, the first electronic device is enabled to perform the method according to any one of claims 1 to 8.

16. A second electronic device, comprising:
one or more processors, a memory, a plurality of applications, and one or more computer programs, wherein the one or more computer programs are stored in the memory, the one or more computer programs comprise instructions, and when the instructions are executed by the second electronic device, the second electronic device is enabled to perform the method according to any one of claims 9 to 14.

17. A computer-readable storage medium, wherein the computer-readable storage medium stores a computer program, and when the computer program is run on a computer, the computer is enabled to perform the method according to any one of claims 1 to 8.

18. A computer-readable storage medium, wherein the computer-readable storage medium stores a computer program, and when the computer program is run on a computer, the computer is enabled to perform the method according to any one of claims 9 to 14.
